(19) Europäisches Patentamt
European Patent Office
Office européen des brevets

(11) **EP 4 682 774 A1**

(12) **EUROPEAN PATENT APPLICATION**
published in accordance with Art. 153(4) EPC

(43) Date of publication:
**21.01.2026 Bulletin 2026/04**

(21) Application number: **24777505.9**

(22) Date of filing: **01.02.2024**

(51) International Patent Classification (IPC):
**G06N 3/098** (2023.01)  **G06N 3/0464** (2023.01)

(86) International application number:
**PCT/CN2024/075124**

(87) International publication number:
**WO 2024/198711 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.03.2023 CN 202310377345**

(71) Applicant: **Huawei Technologies Co., Ltd.
Shenzhen, Guangdong 518129 (CN)**

(72) Inventors:
• **WAN, Shuo
  Shenzhen, Guangdong 518129 (CN)**
• **SHAO, Yunfeng
  Shenzhen, Guangdong 518129 (CN)**
• **CHEN, Xi
  Shenzhen, Guangdong 518129 (CN)**

(74) Representative: **Pfenning, Meinig & Partner mbB
Patent- und Rechtsanwälte
Theresienhöhe 11a
80339 München (DE)**

(54) **FEDERATED LEARNING METHOD AND RELATED APPARATUS**

(57)    A federated learning method is provided, applied to the field of artificial intelligence technologies. According to the method, when obtaining models of different network structures, an aggregation node groups models of a same network structure into a same group, and performs parameter aggregation on models in a same group, to obtain a plurality of aggregation models of different network structures. In addition, for each aggregation model, knowledge distillation training is performed on each aggregation model based on the plurality of originally obtained models, to implement experience transfer between the models of different network structures, so as to integrate knowledge and experience of models of various network structures, combine advantages of parameter aggregation and knowledge distillation in integrating model experience, implement aggregation of the models of different network structures, and ensure prediction precision of a model obtained through aggregation.

FIG. 7

## Description

This application claims priority to Chinese Patent Application No. 202310377345.8, filed with the China National Intellectual Property Administration on March 31, 2023 and entitled "FEDERATED LEARNING METHOD AND RELATED APPARATUS", which is incorporated herein by reference in its entirety.

## TECHNICAL FIELD

This application relates to the field of artificial intelligence (artificial intelligence, AI) technologies, and in particular, to a federated learning method and a related apparatus.

## BACKGROUND

As users have an increasingly strong will to protect personal privacy data, user data of data owners cannot be exchanged between the data owners, and large and small "data silos" are formed. The "data silo" poses a new challenge to massive data-based artificial intelligence (artificial intelligence, AI), to be specific, how to train a machine learning model without permission to obtain enough training data?

Federated learning emerges to cope with the challenge brought by the "data silo". Federated learning can effectively help clients perform joint training without sharing a data resource (in other words, training data is retained locally), to build a shared machine learning model. In a local training phase, each client trains a local model based on training data. In a model aggregation phase, each client uploads the local models to a cloud server, and the cloud server aggregates the local models to obtain a global model and delivers the global model. The client updates the global model based on the training data, to obtain a new local model. This process is repeated until the global model converges.

A current federated learning method requires that models trained by clients are models of a same structure. In this way, a central node can aggregate, in a parameter averaging manner, models uploaded by a plurality of clients. However, in some cases, models trained on different clients may be models of different structures. Therefore, the existing federated learning method cannot be applied to a scenario in which models are heterogeneous, and it is difficult to implement model aggregation.

## SUMMARY

This application provides a federated learning method, to implement aggregation of models of different network structures, and ensure prediction precision of a model obtained through aggregation.

A first aspect of this application provides a federated learning method, applied to the field of artificial intelligence technologies. The method includes: An aggregation node obtains a plurality of models, where the plurality of models are obtained from a plurality of nodes. In addition, the plurality of models obtained by the aggregation node are used to perform a same processing task. For example, the plurality of models are all used to perform an image processing task or a natural language processing task.

Then, the aggregation node groups the plurality of models into a plurality of groups based on network structures of the plurality of models, where each of the plurality of groups includes at least one model, and models in a same group have a same network structure.

Then, the aggregation node performs parameter aggregation on models in each of the plurality of groups, to obtain a plurality of aggregation models, where models in a same group are aggregated to obtain one aggregation model, and the plurality of aggregation models correspond to the plurality of groups. Specifically, a network structure of each aggregation model is the same as a network structure of a model in a group corresponding to the aggregation model, and a weight parameter in each aggregation model may be obtained by performing weighted summation on weight parameters in one or more models in a same group.

After the plurality of aggregation models are obtained, the aggregation node performs knowledge distillation training on each of the plurality of aggregation models by using the plurality of models as teacher models, to obtain a plurality of trained models.

Finally, the aggregation node sends the plurality of trained models to the plurality of nodes.

In this solution, when obtaining models of different network structures, the aggregation node groups models of a same network structure into a same group, and performs parameter aggregation on models in a same group, to obtain a plurality of aggregation models of different network structures. In addition, for each aggregation model, knowledge distillation training is performed on each aggregation model based on a plurality of originally obtained models, to implement experience transfer between the models of different network structures, so as to integrate knowledge and experience of the models of different network structures, and improve prediction precision of the models.

Parameter aggregation is performed on models of a same network structure, and knowledge distillation is performed on the aggregation model based on models of various network structures, to combine advantages of parameter aggregation and knowledge distillation in integrating model experience, implement aggregation of the models of different network structures, and ensure prediction precision of models obtained through aggregation.

In a possible implementation, a process in which the aggregation node performs knowledge distillation training on each of the plurality of aggregation models may specifically include: The aggregation node separately inputs a training sample into a first aggregation model and the plurality of models, to obtain a target prediction result and a plurality of prediction results, where the first aggregation model is any one of the plurality of aggregation models, the target prediction result corresponds to the first aggregation model, and the plurality of prediction results correspond to the plurality of models; and the aggregation node trains the first aggregation model based on a loss function, to obtain a trained first aggregation model, where the loss function is obtained based on a difference between the target prediction result and the plurality of prediction results.

In this solution, a distillation loss function is built based on the difference between the prediction results of the plurality of original models and the prediction result of the aggregation model, so that experience transfer between the models of different network structures can be supported in a manner based on knowledge distillation, the aggregation model can further aggregate knowledge and experience in various network structures, and prediction precision of the aggregation model can be improved.

In a possible implementation, the loss function used to train the first aggregation model is obtained based on a difference between the target prediction result and each of the plurality of prediction results; or the loss function is obtained based on a difference between the target prediction result and a weighted average value of the plurality of prediction results.

In a possible implementation, the loss function used to train the first aggregation model includes a first sub-loss function and a second sub-loss function, the first sub-loss function is obtained based on the difference between the target prediction result and the plurality of prediction results, and the second sub-loss function is obtained based on a difference between an actual label of the training sample and the target prediction result.

In this solution, a distillation loss function is built based on the difference between the prediction results of the plurality of original models and the prediction result of the aggregation model, and a label loss function is built based on the actual label of the training sample, so that experience transfer between the models of different network structures can be supported in a manner based on knowledge distillation under a constraint of the label loss function, the aggregation model can effectively aggregate knowledge and experience in various network structures, and prediction precision of the aggregation model can be improved.

In a possible implementation, the method further includes: The aggregation node determines a target model from the plurality of trained models based on training data; and performs knowledge distillation training on the target model by using the plurality of trained models as teacher models, to obtain an updated target model, where the updated target model is used to execute an inference task based on local data.

In this solution, after obtaining the target model through filtering based on the local training data, the aggregation node performs knowledge distillation training on the target model by using the originally received model as the teacher model, so that it can be ensured that the target model does not forget original experience while performing personalized fine tuning on the local data of the first node, and a sharp fluctuation of prediction precision of the target model caused by poor local data quality of the first node can be effectively avoided (that is, a phenomenon of overfitting the target model can be avoided).

In a possible implementation, that the aggregation node determines a target model from the plurality of trained models based on training data specifically includes: The aggregation node separately inputs the training data into each of the plurality of models, and determines prediction precision of each model based on a prediction result output by each model; and the aggregation node determines the target model based on the prediction precision of each model, where the target model includes one or more models with highest prediction precision in the plurality of trained models.

In this solution, the prediction precision of each model is determined based on the local data of the node, to measure an adaptation degree of each model for the local data, and ensure that the node can select, from the plurality of models, a target model that can have optimal performance when processing the local data of the node.

In a possible implementation, that the aggregation node determines a target model from the plurality of trained models based on training data specifically includes: The aggregation node inputs the training data into a gate network, to obtain a plurality of weight values output by the gate network, where the plurality of weight values are in a one-to-one correspondence with the plurality of trained models, the plurality of weight values respectively indicate weights of output results of the plurality of trained models in a weighted summation process, and the gate network is a network obtained through pre-training. In other words, the plurality of trained models cooperate with the gate network to process the training data. The gate network is configured to output, based on the training data, a weight value corresponding to each of the plurality of trained models. In this way, after each trained model outputs an output result corresponding to the training data, weighted summation may be performed on the plurality of output results based on the weight values corresponding to the trained models, to obtain a final output result.

The aggregation node determines the target model based on the plurality of weight values, where the target model includes one or more models corresponding to a highest weight value in the plurality of trained models. In other words, the first node may measure, based on a weight value corresponding to each trained model, an adaptation degree of each trained model for the local data of the first node, to select one or more models (that is, the target model) with a highest adaptation degree from the plurality of trained models.

In this solution, the weight value corresponding to each model is output by training the gate network, to measure an adaptation degree of each model for the local data, and ensure that the node can select, from the plurality of models, a target model that can have optimal performance when processing the local data of the node.

In a possible implementation, that the aggregation node sends a plurality of trained models to the plurality of nodes specifically includes: The aggregation node determines, based on target data, some trained models from the plurality of trained models, where the target data is data obtained from a first node, and the some trained models are models that are in the plurality of trained models and that have optimal performance when processing the target data; and the aggregation node sends the some trained models to the first node.

In a possible implementation, the performing parameter aggregation on models in each of the plurality of groups to obtain a plurality of aggregation models includes: performing weighted summation on weight parameters of a plurality of models in a first group, to obtain a first aggregation model, where the first group belongs to the plurality of groups, and the first aggregation model belongs to the plurality of aggregation models.

A second aspect of this application provides a federated learning method, including:

receiving a plurality of models from an aggregation node, where the plurality of models have different network structures, and the plurality of models are obtained by the aggregation node by aggregating models on different nodes;

determining a target model from the plurality of models based on training data; and

performing knowledge distillation training on the target model by using the plurality of models as teacher models, to obtain a trained target model.

In a possible implementation, the determining a target model from the plurality of models based on training data includes:

separately inputting the training data into each of the plurality of models, and determining prediction precision of each model based on a prediction result output by each model; and

determining the target model based on the prediction precision of each model, where the target model is one or more models with highest prediction precision in the plurality of models.

In a possible implementation, the determining a target model from the plurality of models based on training data includes:

inputting the training data into a gate network, to obtain a plurality of weight values output by the gate network, where the plurality of weight values are in a one-to-one correspondence with a plurality of trained models, the plurality of weight values respectively indicate weights of output results of the plurality of trained models in a weighted summation process, and the gate network is a network obtained through pre-training; and

determining the target model based on the plurality of weight values, where the target model includes one or more models corresponding to a highest weight value in the plurality of models.

In a possible implementation, the plurality of models are obtained by the aggregation node, after receiving the models on the different nodes, by performing parameter aggregation on models of a same network structure and performing knowledge distillation training on aggregated models based on the models on the different nodes.

A third aspect of this application provides a federated learning apparatus, including:

an obtaining module, configured to obtain a plurality of models, where the plurality of models are obtained from a plurality of nodes;

a processing module, configured to group the plurality of models into a plurality of groups based on network structures of the plurality of models, where each of the plurality of groups includes at least one model, and models in a same group have a same network structure, where

the processing module is further configured to perform parameter aggregation on models in each of the plurality of groups to obtain a plurality of aggregation models, where models in a same group are aggregated to obtain one aggregation model, and the plurality of aggregation models correspond to the plurality of groups; and

the processing module is further configured to perform knowledge distillation training on each of the plurality of aggregation models by using the plurality of models as teacher models, to obtain a plurality of trained models; and a sending module, configured to send the plurality of trained models to the plurality of nodes.

In a possible implementation, the processing module is further configured to:

separately input a training sample into a first aggregation model and the plurality of models, to obtain a target prediction result and a plurality of prediction results, where the first aggregation model is any one of the plurality of aggregation models, the target prediction result corresponds to the first aggregation model, and the plurality of prediction results correspond to the plurality of models; and

train the first aggregation model based on a loss function, to obtain a trained first aggregation model, where the loss function is obtained based on a difference between the target prediction result and the plurality of prediction results.

In a possible implementation, the loss function is obtained based on a difference between the target prediction result and each of the plurality of prediction results; or

the loss function is obtained based on a difference between the target prediction result and a weighted average value of the plurality of prediction results.

In a possible implementation, the loss function includes a first sub-loss function and a second sub-loss function, the first sub-loss function is obtained based on the difference between the target prediction result and the plurality of prediction results, and the second sub-loss function is obtained based on a difference between an actual label of the training sample and the target prediction result.

In a possible implementation, the processing module is further configured to:

determine a target model from the plurality of trained models based on training data; and

perform knowledge distillation training on the target model by using the plurality of trained models as teacher models, to obtain an updated target model, where the updated target model is used to execute an inference task based on local data.

In a possible implementation, the processing module is further configured to:

separately input the training data into each of the plurality of models, and determine prediction precision of each model based on a prediction result output by each model; and

determine the target model based on the prediction precision of each model, where the target model includes one or more models with highest prediction precision in the plurality of trained models.

In a possible implementation, the processing module is further configured to:

input the training data into a gate network, to obtain a plurality of weight values output by the gate network, where the plurality of weight values are in a one-to-one correspondence with the plurality of trained models, the plurality of weight values respectively indicate weights of output results of the plurality of trained models in a weighted summation process, and the gate network is a network obtained through pre-training; and

determine the target model based on the plurality of weight values, where the target model includes one or more models corresponding to a highest weight value in the plurality of trained models.

In a possible implementation,

the processing module is further configured to determine, based on target data, some trained models from the plurality of trained models, where the target data is data obtained from a first node, and the some trained models are models that are in the plurality of trained models and that have optimal performance when processing the target data; and

the sending module is further configured to send the some trained models to the first node.

In a possible implementation, the processing module is further configured to perform weighted summation on weight parameters of a plurality of models in a first group, to obtain the first aggregation model.

The first group belongs to the plurality of groups, and the first aggregation model belongs to the plurality of aggregation models.

A fourth aspect of this application provides a federated learning apparatus, including:

a receiving module, configured to receive a plurality of models from an aggregation node, where the plurality of models have different network structures, and the plurality of models are obtained by the aggregation node by aggregating models on different nodes; and

a processing module, configured to determine a target model from the plurality of models based on training data, where

the processing module is further configured to perform knowledge distillation training on the target model by using the plurality of models as teacher models, to obtain a trained target model.

In a possible implementation, the processing module is further configured to:

separately input the training data into each of the plurality of models, and determine prediction precision of each model based on a prediction result output by each model; and

determine the target model based on the prediction precision of each model, where the target model is one or more models with highest prediction precision in the plurality of models.

In a possible implementation, the processing module is further configured to:

input the training data into a gate network, to obtain a plurality of weight values output by the gate network, where the plurality of weight values are in a one-to-one correspondence with the plurality of trained models, the plurality of weight values respectively indicate weights of output results of the plurality of trained models in a weighted summation process, and the gate network is a network obtained through pre-training; and

determine the target model based on the plurality of weight values, where the target model includes one or more models corresponding to a highest weight value in the plurality of models.

In a possible implementation, the plurality of models are obtained by the aggregation node, after receiving the models on the different nodes, by performing parameter aggregation on models of a same network structure and performing knowledge distillation training on aggregated models based on the models on the different nodes.

A fifth aspect of this application provides a federated learning apparatus, and the federated learning apparatus may include a processor, where the processor and a memory are coupled, the memory stores program instructions, and when the program instructions stored in the memory are executed by the processor, the method according to any implementation of the first aspect or the second aspect is implemented. For details about the steps performed by the processor in any possible implementation of the first aspect or the second aspect, refer to the first aspect or the second aspect. Details are not described herein again.

A sixth aspect of this application provides a computer-readable storage medium. The computer-readable storage medium stores a computer program. When the computer-readable storage medium is run on a computer, the computer is enabled to perform the method according to any implementation of the first aspect or the second aspect.

A seventh aspect of this application provides a circuit system. The circuit system includes a processing circuit, and the processing circuit is configured to perform the method according to any implementation of the first aspect or the second aspect.

An eighth aspect of this application provides a computer program product. When the computer program product runs on a computer, the computer is enabled to perform the method according to any implementation of the first aspect or the second aspect.

A ninth aspect of this application provides a chip system. The chip system includes a processor, configured to support a server or a threshold obtaining apparatus in implementing a function in any implementation of the first aspect or the second aspect, for example, sending or processing data and/or information in the foregoing method. In a possible design, the chip system further includes a memory, and the memory is configured to store program instructions and data that are necessary for a server or a communication device. The chip system may include a chip, or may include a chip and another discrete component.

For beneficial effect of the second aspect to the ninth aspect, refer to the descriptions of the first aspect. Details are not described the herein again.

## BRIEF DESCRIPTION OF DRAWINGS

FIG. 1 is a diagram of a federated learning scenario according to an embodiment of this application;

FIG. 2 is a diagram of an execution process of federated learning in a related technology;

FIG. 3 is a diagram of a structure of a convolutional neural network according to an embodiment of this application;

FIG. 4 is a diagram of a structure of another convolutional neural network according to an embodiment of this application;

FIG. 5 is a diagram of a system architecture 500 according to an embodiment of this application;

FIG. 6 is a diagram of a system architecture 600 according to an embodiment of this application;

FIG. 7 is a schematic flowchart of a federated learning method according to an embodiment of this application;

FIG. 8 is a diagram in which an aggregation node receives a plurality of models according to an embodiment of this application;

FIG. 9 is a diagram of performing grouping and parameter aggregation on a plurality of models according to an embodiment of this application;

FIG. 10 is a diagram of performing knowledge distillation on a plurality of aggregation models according to an embodiment of this application;

FIG. 11 is a diagram in which an aggregation node sends a trained model to each node according to an embodiment of this application;

FIG. 12A is a diagram of filtering a target model according to an embodiment of this application;

FIG. 12B is a diagram of filtering a target model according to an embodiment of this application;

FIG. 13 is another diagram of filtering a target model according to an embodiment of this application;

FIG. 14 is a schematic flowchart of another federated learning method according to an embodiment of this application;

FIG. 15 is a diagram of a structure of a federated learning apparatus according to an embodiment of this application;

FIG. 16 is a diagram of a structure of a federated learning apparatus according to an embodiment of this application;

FIG. 17 is a diagram of a structure of an execution device according to an embodiment of this application;

FIG. 18 is a diagram of a structure of a chip according to an embodiment of this application; and

FIG. 19 is a diagram of a structure of a computer-readable storage medium according to an embodiment of this application.

## DESCRIPTION OF EMBODIMENTS

To make the objectives, technical solutions, and advantages of this application clearer and more comprehensible, the following describes embodiments of this application with reference to the accompanying drawings. It is clear that the described embodiments are only some but not all of embodiments of this application. A person of ordinary skill in the art may learn that, as a new application scenario emerges, the technical solutions provided in embodiments of this application are also applicable to a similar technical problem.

In the specification, claims, and accompanying drawings of this application, the terms "first", "second", and so on are intended to distinguish between similar objects but do not necessarily indicate a specific order or sequence. It should be understood that the descriptions termed in such a manner are interchangeable in proper cases so that embodiments can be implemented in another order than the order illustrated or described in this application. Moreover, terms "include" and "have" and any other variants thereof mean to cover a non-exclusive inclusion. For example, a process, a method, a system, a product, or a device that includes a list of steps or modules is not necessarily limited to steps or modules expressly listed, but may include other steps or modules not expressly listed or inherent to such a process, method, product, or device. Naming or numbering of steps in this application does not mean that steps in a method procedure need to be performed based on a time/logical sequence indicated by the naming or numbering. An execution sequence of procedure steps that have been named or numbered may be changed based on a technical objective to be implemented, provided that same or similar technical effect can be achieved. Unit division in this application is logical division and may be other division during actual implementation. For example, a plurality of units may be combined or integrated into another system, or some features may be ignored or not performed. In addition, the displayed or discussed mutual couplings or direct couplings or communication connections may be implemented through some interfaces. The indirect couplings or communication connections between the units may be implemented in electronic or other similar forms. This is not limited in this application. In addition, the units or subunits described as separate parts may or may not be physically separate, may or may not be physical units, or may be distributed into a plurality of circuit units. Some or all of the units or subunits may be selected based on actual requirements to achieve the objectives of the solutions of this application.

For ease of understanding, the following first describes some technical terms used in embodiments of this application.

(1) Federated learning

Federated learning is essentially a model training method, and can implement data sharing and joint model building on the basis of ensuring data privacy and security and legal compliance. A core idea of the federated learning is that when a plurality of data sources participate in model training together, raw data does not need to be transferred, and joint model training is performed only by exchanging model intermediate parameters. The raw data can be retained locally. In this manner, balance between data privacy protection and data sharing and analysis, that is, a data application mode of "available and invisible data", is achieved.

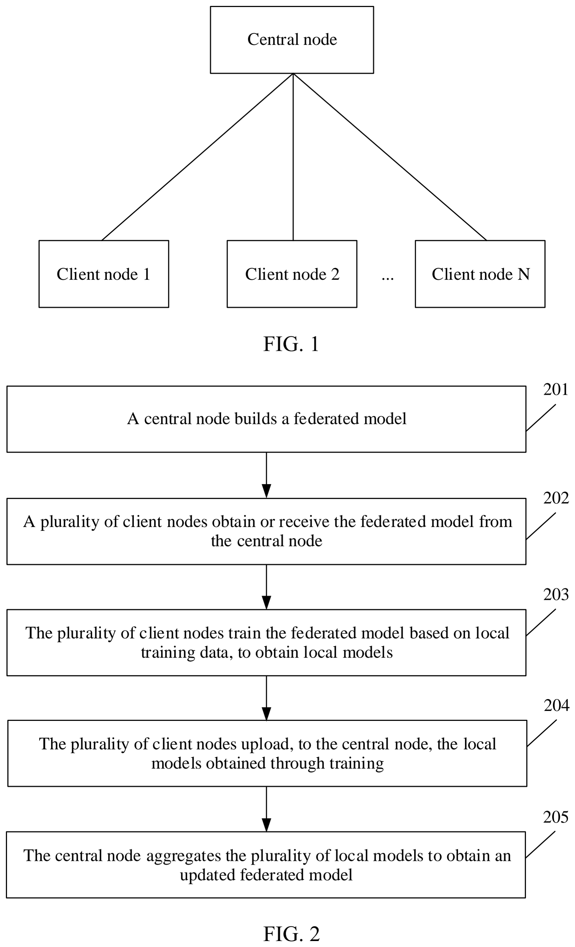

For example, FIG. 1 is a diagram of a federated learning scenario according to an embodiment of this application. The federated learning scenario may include a plurality of client nodes and a central node, where the plurality of client nodes and the central node may be any node (for example, a network node) that supports data transmission. For example, the client node may be a mobile terminal or a personal computer. The central node may be a server or a cluster server. In some embodiments, the client node may be referred to as an owner of training data, and the central node may be referred to as a coordinator in a federated learning process.

The central node can be used to maintain a federated model. The client node may obtain the federated model from the central node, and perform local training based on local training data, to obtain a local model. After obtaining the local model through training, the client node may send the local model to the central node, so that the central node updates or optimizes the federated model. This is repeatedly performed, and a plurality of rounds of iterations are performed until the federated model converges or a preset iteration stop condition is met.

A general process of federated learning is described below with reference to FIG. 2. As shown in FIG. 2, an execution process of federated learning includes the following steps 201 to 205.

Step 201: A central node builds a federated model.

The central node may build a general-purpose machine learning model, or may build a specific machine learning model based on a requirement. An image recognition task is used as an example. The central node may build a convolutional neural network (convolutional neural network, CNN) as the federated model.

Step 202: A plurality of client nodes obtain or receive the federated model from the central node.

The plurality of client nodes may obtain or receive a same federated model from the central node. For example, in an implementation, the client node may actively request the central node to deliver the federated model. Alternatively, in another implementation, the central node actively delivers the federated model to the client node. For example, the client node is a personal computer, and the central node is a server. In this case, the personal computer may download the federated model from the server.

Step 203: The plurality of client nodes train the federated model based on local training data, to obtain local models.

Specifically, the plurality of client nodes may use the federated model as an initial model of the local model, and then perform one or more steps of training on the initial model based on the local training data, to obtain the local model.

Because different client nodes have different local training data, different client nodes can obtain different local models through training based on the same federated model.

Step 204: The plurality of client nodes upload, to the central node, the local models obtained through training.

Step 205: The central node aggregates the plurality of local models to obtain an updated federated model.

For example, in an implementation, the central node may perform weighted summation on parameters of the local models of the plurality of client nodes, and use a result of the weighted summation as the updated federated model.

It should be noted that the process described in steps 201 to 205 may be considered as a round of iteration in a federated learning process. The central node and the client node may repeatedly perform steps 201 to 205 until the federated model converges or reaches preset effect.

Generally, federated learning can be used to train a machine learning model. A most common machine learning model is a neural network. The following also explains concepts related to the neural network.

(2) Neural network

The neural network may include a neuron. The neuron may be an operation unit that uses xs (namely, input data) and an intercept of 1 as an input. An output of the operation unit may be as follows:

$$h_{W,b}\left(x\right) = f\left(W^T x\right) = f\left(\sum\nolimits_{s=1}^{n} W_s x_s + b\right)$$

Herein, s=1, 2, ..., and n, n is a natural number greater than 1, Ws is a weight of xs, b is a bias of the neuron, and f is an activation function (activation function) of the neuron, and is used to introduce a non-linear characteristic into the neural network, to convert an input signal in the neuron into an output signal. The output signal of the activation function may be used as an input of a next convolutional layer, and the activation function may be a sigmoid function. The neural network is a network constituted by linking a plurality of single neural units together. To be specific, an output of a neural unit may be an input of another neural unit. An input of each neuron may be connected to a local receptive field of a previous layer to extract a feature of the local receptive field. The local receptive field may be a region including several neurons.

(3) Deep neural network

The deep neural network (Deep Neural Network, DNN), also referred to as a multilayer neural network, may be understood as a neural network having many hidden layers. The "many" herein does not have a special measurement standard. The DNN is divided based on locations of different layers, and a neural network in the DNN may be divided into three types: an input layer, a hidden layer, and an output layer. Generally, the first layer is the input layer, the last layer is the output layer, and the middle layer is the hidden layer. Layers are fully connected. To be specific, any neuron at an $i^{th}$ layer is necessarily connected to any neuron at an $(i+1)^{th}$ layer. Although the DNN seems complex, the DNN is actually not complex in terms of work at each layer, and is simply represented as the following linear relationship expression: $\vec{y} = \alpha(W\vec{x} + \vec{b})$, where $\vec{x}$ is an input vector, $\vec{y}$ is an output vector, b is an offset vector, W is a weight matrix (also referred to as a coefficient), and $\alpha()$ is an activation function. At each layer, the output vector $\vec{y}$ is obtained by performing such a simple operation on the input vector $\vec{x}$.

Because there are many layers in the DNN, there are also many coefficients W and bias vectors b. Definitions of these parameters in the DNN are as follows: The coefficient W is used as an example. It is assumed that in a DNN having three layers, a linear coefficient from a $4^{th}$ neuron at a second layer to a $2^{nd}$ neuron at a third layer is defined as $W_{24}^{3}$. The superscript 3 represents a layer at which the coefficient W is located, and the subscript corresponds to an output index 2 at the third layer and an input index 4 at the second layer. In conclusion, a coefficient from a $k^{th}$ neuron at an $(L-1)^{th}$ layer to a $j^{th}$ neuron at a $L^{th}$ layer is defined as $W_{jk}^{L}$. It should be noted that there is no parameter W at the input layer. In the deep neural network, more hidden layers make the network more capable of describing a complex case in the real world. Theoretically, a model with more parameters has higher complexity and a larger "capacity". It indicates that the model can complete a more complex learning task. Training the deep neural network is a process of learning a weight matrix, and a final objective of the training is to obtain a weight matrix of all layers of the trained deep neural network (a weight matrix formed by vectors W at many layers).

(4) Convolutional neural network (Convolutional Neural Network, CNN)

The convolutional neural network is a deep neural network of a convolutional structure. The convolutional neural network includes a feature extractor including a convolutional layer and a sub-sampling layer. The feature extractor may be considered as a filter. A convolution process may be considered as performing convolution by using a trainable filter and an input image or a feature map (feature map). The convolution layer is a neuron layer (for example, a first convolution layer and a second convolution layer in this embodiment) that performs convolution processing on an input signal in the convolutional neural network. At the convolutional layer of the convolutional neural network, one neuron may be connected only to some adjacent-layer neurons. One convolutional layer usually includes several feature planes, and each feature plane may include some neural units that are in a rectangular arrangement. Neural units in a same feature plane share a weight, and the weight shared herein is a convolution kernel. Weight sharing may be understood as that an image information extraction manner is irrelevant to a location. A principle implied herein is that statistical information of a part of an image is the same as that of other parts. This means that image information learned in a part can also be used in another part. Therefore, image information obtained through same learning can be used for all locations on the image. At a same convolutional layer, a plurality of convolution kernels may be used for extracting different image information. Usually, a larger quantity of convolution kernels indicates richer image information reflected in a convolution operation.

The convolution kernel may be initialized in a form of a random-size matrix. In a process of training the convolutional neural network, an appropriate weight may be obtained through learning for the convolution kernel. In addition, benefits directly brought by weight sharing are that connections between layers of the convolutional neural network are reduced, and an overfitting risk is reduced.

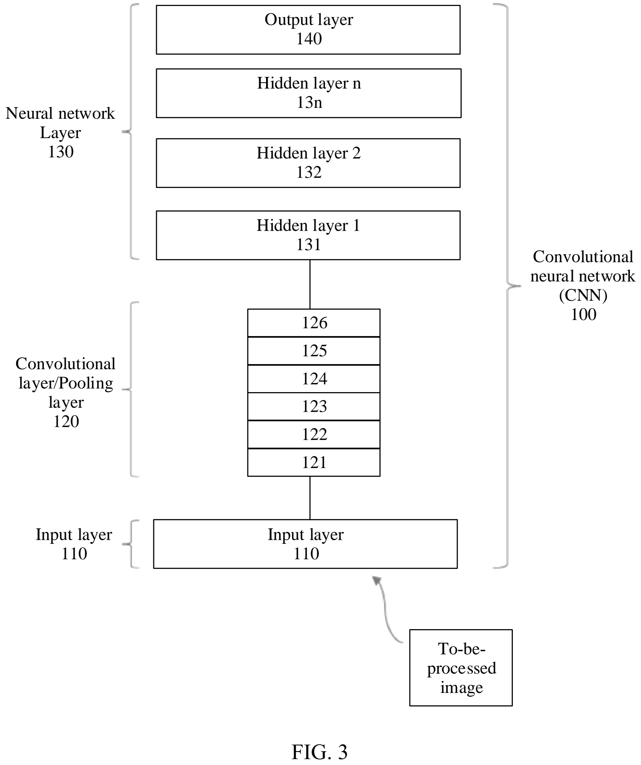

Specifically, as shown in FIG. 3, a convolutional neural network (CNN) 100 may include an input layer 110, a convolutional layer/pooling layer 120, where the pooling layer is optional, and a neural network layer 130.

A structure including the convolution layer/pooling layer 120 and the neural network layer 130 may be a first convolution layer and a second convolution layer described in this application. The input layer 110 is connected to the convolution layer/pooling layer 120, the convolution layer/pooling layer 120 is connected to the neural network layer 130, an output of the neural network layer 130 may be an input to an activation layer, and the activation layer may perform non-linear processing on the output of the neural network layer 130.

Convolutional layer/Pooling layer 120: Convolutional layer: As shown in FIG. 3, the convolutional layer/pooling layer 120 may include, for example, layers 121 to 126. In an implementation, the layer 121 is a convolutional layer, the layer 122 is a pooling layer, the layer 123 is a convolutional layer, the layer 124 is a pooling layer, the layer 125 is a convolutional layer, and the layer 126 is a pooling layer. In another implementation, the layers 121 and 122 are convolutional layers, the layer 123 is a pooling layer, the layers 124 and 125 are convolutional layers, and the layer 126 is a pooling layer. To be specific, an output of a convolutional layer may be used as an input of a subsequent pooling layer, or may be used as an input of another convolutional layer to continue to perform a convolution operation.

The convolutional layer 121 is used as an example. The convolutional layer 121 may include a plurality of convolution operators. A convolution operator is also referred to as a kernel. In image processing, the convolution operator functions as a filter that extracts specific information from an input image matrix. The convolution operator may be essentially a weight matrix, and the weight matrix is usually predefined. In a process of performing a convolution operation on an image, the weight matrix is usually used to process pixels at a granularity level of one pixel (or two pixels, which depends on a value of a stride (stride)) in a horizontal direction on the input image, to extract a specific feature from the image. A size of the weight matrix should be related to a size of the picture. It should be noted that a depth dimension (depth dimension) of the weight matrix is the same as a depth dimension of the input picture. During a convolution operation, the weight matrix extends to an entire depth of the input picture. Therefore, a convolution output of a single depth dimension is generated by performing convolution with a single weight matrix. However, in most cases, a plurality of weight matrices of a same dimension rather than a single weight matrix are applied. Outputs of the weight matrices are stacked to form a depth dimension of a convolutional image. Different weight matrices may be used to extract different features of the image. For example, one weight matrix is used to extract edge information of the image, another weight matrix is used to extract a specific color of the image, still another weight matrix is used to blur an unnecessary noise in the image, and so on. Because the plurality of weight matrices have the same dimension, feature maps extracted by using the plurality of weight matrices with the same dimension also have a same dimension. Then, the plurality of extracted feature maps with the same dimension are combined to form output of the convolution operation.

Weight values in these weight matrices need to be obtained in actual application through massive training. The weight matrices that are formed based on the weight values obtained through training may be used to extract information from the input image, to help the convolutional neural network 100 perform correct prediction.

When the convolutional neural network 100 includes a plurality of convolutional layers, a large quantity of general features are usually extracted at an initial convolutional layer (for example, the convolutional layer 121). The general feature may be also referred to as a low-level feature. As a depth of the convolutional neural network 100 increases, a feature extracted at a more subsequent convolutional layer (for example, the convolutional layer 126) is more complex, for example, a high-level semantic feature. A feature with higher semantics is more applicable to a to-be-resolved problem.

Pooling layer: A quantity of training parameters often needs to be reduced. Therefore, a pooling layer usually needs to be periodically introduced after a convolutional layer. To be specific, for the layers 121 to 126 exemplified by 120 in FIG. 3, one convolutional layer may be followed by one pooling layer, or a plurality of convolutional layers may be followed by one or more pooling layers.

Neural network layer 130: After processing performed at the convolutional layer/pooling layer 120, the convolutional neural network 100 is not ready to output required output information. As described above, at the convolutional layer/pooling layer 120, only a feature is extracted, and parameters resulting from an input image are reduced. However, to generate final output information (required class information or other related information), the convolutional neural network 100 needs to use the neural network layer 130 to generate one or a group of outputs of a quantity of required classes. Therefore, the neural network layer 130 may include a plurality of hidden layers (131, 132, ..., and 13n shown in FIG. 3) and an output layer 140. Parameters included in the plurality of hidden layers may be obtained through pre-training based on related training data of a specific task type. For example, the task type may include image recognition, image classification, super-resolution image reconstruction, and the like.

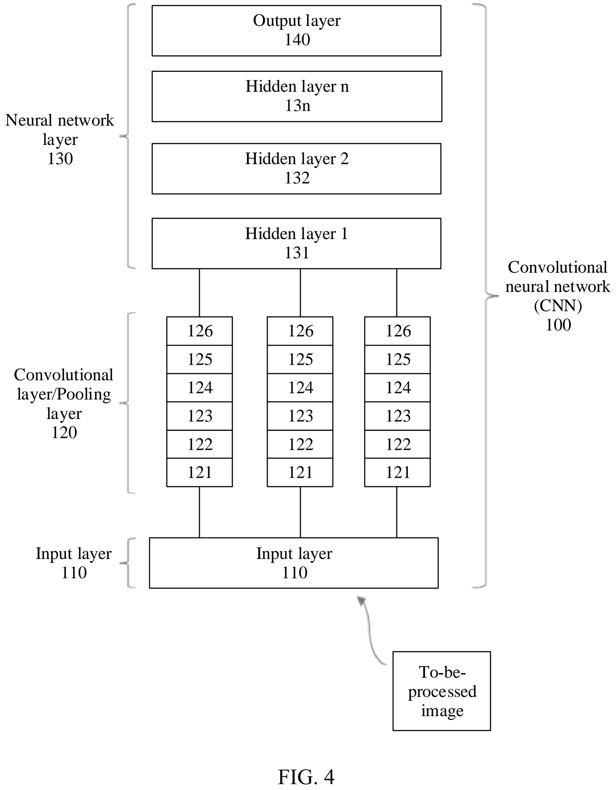

At the neural network layer 130, the plurality of hidden layers are followed by the output layer 140, namely, the last layer of the entire convolutional neural network 100. The output layer 140 has a loss function similar to categorization cross entropy, and the loss function is specifically used to calculate a prediction error. Once forward propagation (that is, propagation in a direction from 110 to 140, as shown in FIG. 4) of the entire convolutional neural network 100 is completed, back propagation (that is, propagation in a direction from 140 to 110, as shown in FIG. 4) is started to update a weight value and a deviation of each layer mentioned above, so as to reduce a loss of the convolutional neural network 100 and an error between a result output by the convolutional neural network 100 through the output layer and an ideal result.

It should be noted that the convolutional neural network 100 shown in FIG. 3 is merely used as an example of a convolutional neural network. During specific application, the convolutional neural network may alternatively exist in a form of another network model, for example, a plurality of parallel convolutional layers/pooling layers shown in FIG. 4, and extracted features are all input to the entire neural network layer 130 for processing.

(5) Loss function

In a process of training a neural network, an output of the neural network is expected to be as close as possible to a value that is truly expected to be predicted. Therefore, a predicted value of a current network and a target value that is truly expected may be compared, and then, a weight vector of each layer of the neural network may be updated based on a difference between the predicted value of the current network and the target value that is truly expected (certainly, an initialization process is usually performed before a first update, that is, a parameter is preconfigured at each layer of the neural network). For example, if a predicted value of the network is high, the weight vector is adjusted to make the prediction lower, and adjustment is continuously performed, until the neural network can predict a target value that is truly expected or a value that is very approximate to the target value that is truly expected. Therefore, "how to obtain, through comparison, a difference between the predicted value and the target value" needs to be predefined. This is a loss function (loss function) or an objective function (objective function). The loss function and the objective function are important equations that measure the difference between the predicted value and the target value. The loss function is used as an example. A higher output value (loss) of the loss function indicates a larger difference. Therefore, training of the neural network is a process of minimizing the loss as much as possible.

(6) Back propagation algorithm

In the neural network, an error back propagation (back propagation, BP) algorithm may be used to correct a value of a parameter in an initial model in a training process, so that an error loss of the model becomes increasingly small. Specifically, an input signal is transferred forward until an error loss occurs in an output, and the parameter in the initial model is updated based on back propagation error loss information, so that the error loss converges. The back propagation algorithm is an error-loss-centered back propagation motion, and is intended to obtain an optimal model parameter, for example, a weight matrix.

(7) Non-independent and identically distributed (non-independent and identically distributed, Non-IID)

In the theory of probability and science of statistics, independent and identically distributed (Independent and identically distributed, IID) means that probability distribution of each variable in a group of random variables is the same, and the random variables are independent of each other. That the group of random variables is independent and identically distributed does not mean that a probability of occurrence of each event in sample space of the group of random variables is the same. For example, a result sequence obtained by throwing a non-uniform dice is independent and identically distributed, but a probability of throwing each face upward is different.

Non-IID means that variables are not independent or are not identically distributed. In federated learning, Non-IID generally means that data is not identically distributed, because distribution of the data is definitely independent, but the data does not necessarily comply with a same sampling method. For example, a data set includes 100 types of images. A device includes only landscape images, and another device includes only portrait and plant images. The device is in one distribution (1/100), and the another device is in another distribution (2/100). Conversely, if a device includes the 100 types of images and another device also includes the 100 types of images, the two devices are identically distributed.

(8) Modality

From a perspective of data, a modality refers to a data type like an image or a text, and data of different modalities refers to different data types.
From a perspective of a model, a modality refers to a type of the model, and models of different modalities are different models trained based on a plurality of different types of data.

(9) Knowledge transfer

Knowledge transfer refers to a process of transferring an existing knowledge set to another target domain to improve a modeling capability of the target domain. Model-based knowledge transfer can be simply understood as how to enable a built model to learn common knowledge between domains based on transfer learning of model parameters.

(10) Knowledge distillation

Knowledge distillation is a method of transfer learning. Knowledge distillation is to train another network by using an output of a pre-trained model as a supervisory signal. Simply speaking, knowledge distillation is to use a pre-trained network as a teacher network, use a to-be-trained network as a student network, and train the student network based on guidance of the teacher network, so that the student network may have a data processing capability that is the same as or similar to that of the teacher network. Generally, the teacher network may be a complex network model, and the student network may be a simple network model. Through knowledge distillation, feature representation knowledge learned by the complex network model can be transferred to the simple network model.

(11) Experience migration

Experience migration may mean that a node records data mode information of the node in a form of a model or data, and transfers the data mode information to another node for model training, to implement mutual migration of experience between nodes.

A current federated learning method requires that models trained by clients are models of a same structure. In this way, a central node can aggregate, in a parameter averaging manner, models uploaded by a plurality of clients. However, in some cases, because local data owned by different clients may usually be different modalities, that is, data on different clients is non-independent and identically distributed. Therefore, to adapt to local data as much as possible, models trained on different clients may be models of different structures. Therefore, the existing federated learning method cannot be applied to a scenario in which models are heterogeneous, and it is difficult to implement model aggregation.

In view of this, this application provides a federated learning method. When obtaining models of different network structures, an aggregation node groups models of a same network structure into a same group, and performs parameter aggregation on models in a same group, to obtain a plurality of aggregation models of different network structures. In addition, for each aggregation model, knowledge distillation training is performed on each aggregation model based on a plurality of originally obtained models, to implement experience transfer between the models of different network structures, so as to integrate knowledge and experience of the models of different network structures, and improve prediction precision of the models.

In this way, parameter aggregation is performed on models of a same network structure, and knowledge distillation is performed on the aggregation model based on models of various network structures, to combine advantages of parameter aggregation and knowledge distillation in integrating model experience, implement aggregation of the models of different network structures, and ensure prediction precision of models obtained through aggregation.

For ease of understanding, the following first describes a system architecture to which the federated learning method provided in embodiments of this application is applied.

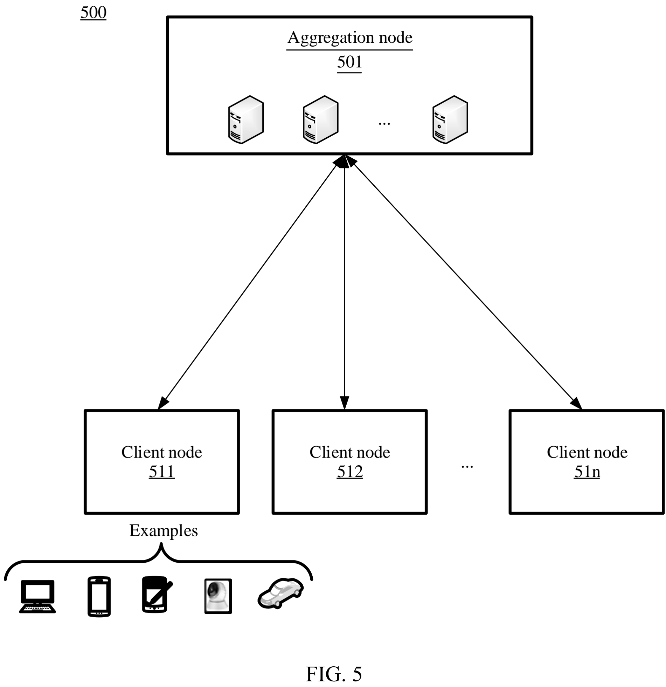

FIG. 5 is a diagram of a system architecture 500 according to an embodiment of this application. As shown in FIG. 5, in the system architecture 500, an aggregation node 501 is implemented by one or more servers. Optionally, the aggregation node 501 may cooperate with another computing device, for example, a device such as a data storage device, a router, or a load balancer. The aggregation node 501 may be disposed on one physical site, or distributed on a plurality of physical sites.

Users may operate respective user equipment (for example, a client node 511, a client node 512, ..., and a client node 51n) to interact with the aggregation node 501. Each client node may represent any computing device, for example, a personal computer, a server, a computer workstation, a smartphone, a tablet computer, an intelligent camera, a smart automobile, another type of cellular phone, a media consumption device, a wearable device, a set-top box, or a game console.

Each client node may interact with the aggregation node 501 through a communication network of any communication mechanism/communication standard. The communication network may be a wide area network, a local area network, a point-to-point connection, or any combination thereof.

In a specific implementation process, the aggregation node 501 serves as a central node and is responsible for receiving a model uploaded by each client node. Network structures of models uploaded by different client nodes may be different. In this way, the aggregation node 501 aggregates the models based on the federated learning method provided in this embodiment, and then returns, to the client nodes, models obtained through aggregation.

Specifically, the system architecture described in FIG. 5 is a centralized system architecture, and a unified central node is responsible for implementing aggregation on the models of the client nodes.

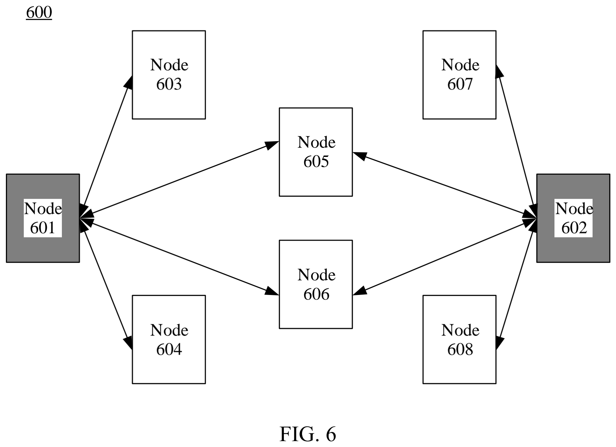

FIG. 6 is a diagram of a system architecture 600 according to an embodiment of this application. As shown in FIG. 6, the system architecture 600 includes a distributed node 601 to a distributed node 608. Each node in the system architecture 600 may represent any computing device, for example, a server, a personal computer, a computer workstation, a smartphone, a tablet computer, an intelligent camera, a smart automobile, another type of cellular phone, a media consumption device, a wearable device, a set-top box, or a game console.

The node 601 and the node 602 may be nodes (for example, servers) with strong computing capabilities. In other words, computing capabilities of the node 601 and the node 602 may be stronger than computing capabilities of the node 603 to the node 608. Therefore, in the system architecture 600, a node with a weak computing capability may send a model to a nearby node with a strong computing capability, so that the node with a strong computing capability can receive models sent by a plurality of nearby nodes. In addition, network structures of models sent by different nodes may be different. For example, the nodes 603 to 606 send models to the nearby node 601, and the nodes 605 to 608 send models to the nearby node 602.

In this way, after receiving a plurality of models, the node with a strong computing capability may aggregate the models based on the federated learning method provided in this embodiment, and then return, to the nodes with weak computing capabilities, models obtained through aggregation.

Specifically, the system architecture described in FIG. 6 is a decentralized distributed system architecture. Some nodes in the system architecture can receive models sent by other nodes, to implement model aggregation. The some nodes responsible for model aggregation may be determined in a plurality of manners. For example, a node with a strong computing capability is determined to be responsible for model aggregation, or a node that is close to a plurality of nodes is determined to be responsible for model aggregation. A node responsible for model aggregation in a distributed system architecture is not limited in this embodiment.

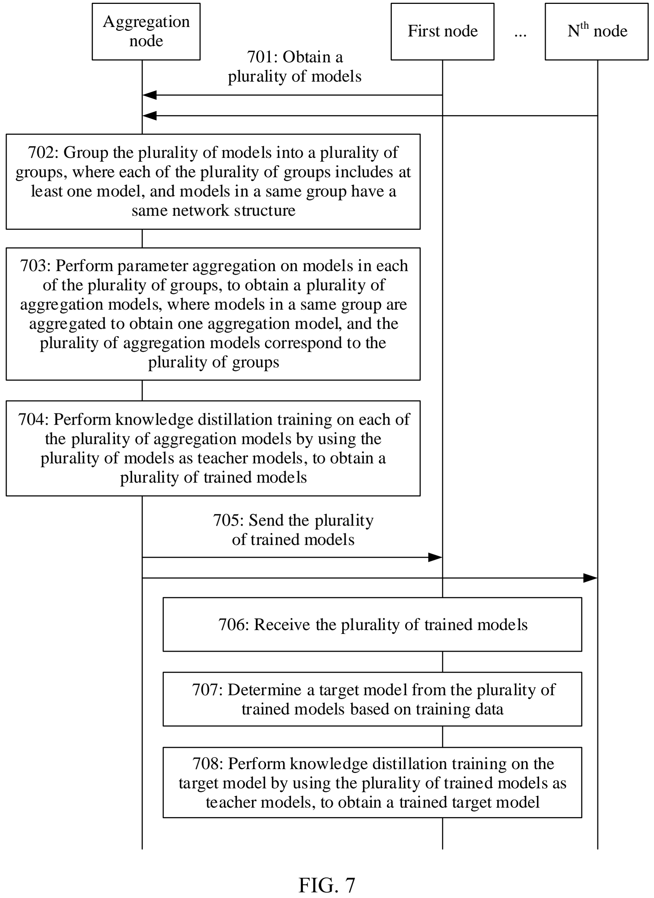

The foregoing describes the method to which the method provided in embodiments of this application is applied. The following describes in detail an execution process of the method provided in embodiments of this application. FIG. 7 is a schematic flowchart of a federated learning method according to an embodiment of this application. As shown in FIG. 7, the federated learning method includes the following steps 701 to 708.

Step 701: An aggregation node obtains a plurality of models, where the plurality of models are obtained from a plurality of nodes.

In this embodiment, the aggregation node may obtain the plurality of models from the plurality of nodes, to aggregate the models deployed on the plurality of nodes. Each of the plurality of nodes may send one or more models to the aggregation node, so that the aggregation node can obtain the plurality of models.

The models obtained by the aggregation node may be models obtained by other nodes through training based on local data, and the aggregation node further aggregates these models.

Optionally, the aggregation node may be a central node in a centralized system architecture, and is only responsible for aggregating the models obtained from other nodes. The aggregation node may alternatively be a node in a distributed system architecture, and may be responsible for aggregating the models obtained from other nodes. In addition, a model is also deployed on the aggregation node, and is configured to process local data on the aggregation node. Therefore, when the aggregation node is the node in the distributed system architecture, the plurality of models obtained by the aggregation node may also include the model deployed on the aggregation node, that is, a local model of the aggregation node.

For example, as shown in FIG. 7, when the aggregation node is the central node in the centralized system architecture, the aggregation node may obtain the foregoing plurality of models from a first node to an $N^{th}$ node; or when the aggregation node is the central node in the distributed system architecture, the aggregation node may obtain the foregoing plurality of models from the aggregation node and a first node to an $N^{th}$ node.

It should be noted that the plurality of models obtained by the aggregation node are used to perform a same processing task. For example, the plurality of models are all used to perform an image processing task or a natural language processing task. The image processing task may include, for example, an image classification task, an image recognition task, and an image enhancement task. The natural language processing task may include, for example, a text recognition task, a text generation task, a speech recognition task, and a text translation task.

That network structures of two models are the same may mean that neural network layers included in the two models are the same, and connection relationships between the neural network layers in the models are also the same. However, weight parameters of the neural network layers included in the models of the same network structure may be different. For example, the plurality of models are used to execute an image classification task. All the plurality of models may be convolutional neural network structures. Some models have a same convolutional neural network structure, and some models have different convolutional neural network structures.

Step 702: The aggregation node groups the plurality of models into a plurality of groups based on network structures of the plurality of models, where each of the plurality of groups includes at least one model, and models in a same group have a same network structure.

Because the plurality of models are obtained by the aggregation node from the plurality of different nodes, the network structures of the models sent by the different nodes to the aggregation node may be the same or may be different. Therefore, the plurality of models received by the aggregation node may correspond to a plurality of network structures, that is, different models may have different network structures.

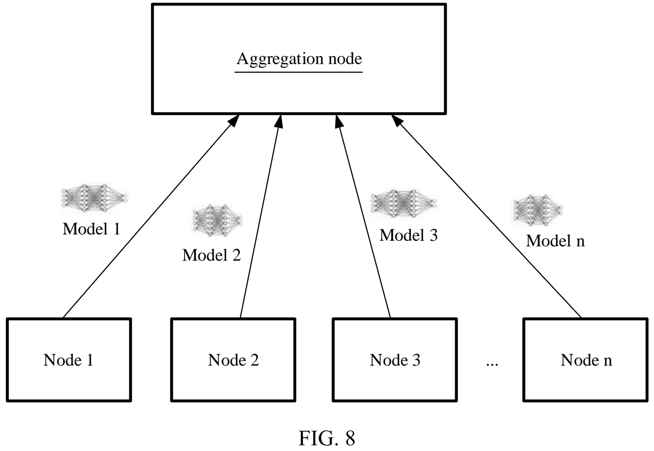

For example, FIG. 8 is a diagram in which an aggregation node receives a plurality of models according to an embodiment of this application. As shown in FIG. 8, the aggregation node receives models from a node 1 to a node n. The node 1 sends a model to the aggregation node, the node 2 sends a model 2 to the aggregation node, the node 3 sends a model 3 to the aggregation node, ..., and the node n sends a model n to the aggregation node. The model 1 sent by the node 1 and the model 3 sent by the node 3 have a same network structure, the model 2 sent by the node 2 and the model n sent by the node n have a same network structure, and the model 1 and the model 2 have different network structures.

In this embodiment, the aggregation node may group the plurality of models into the plurality of groups based on a network structure of each of the plurality of models. In a grouping process, models of a same network structure are grouped into a same group, and models of different network structures are grouped into different groups. Therefore, in the plurality of groups obtained through grouping, each group includes at least one model, and models in a same group have a same network structure.

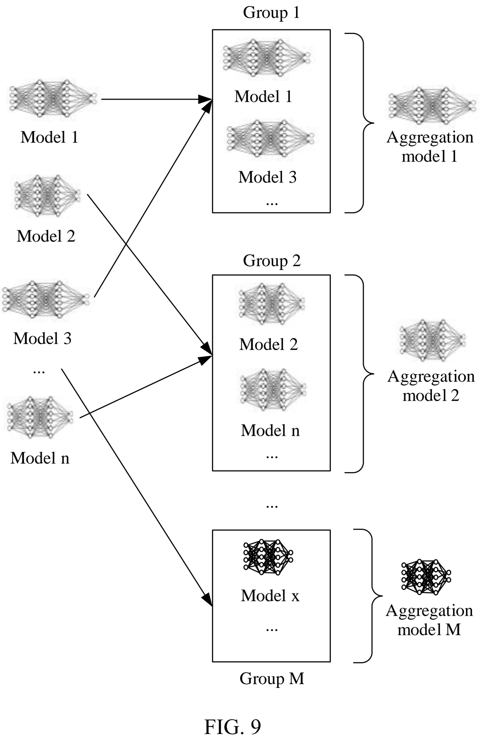

For example, FIG. 9 is a diagram of performing grouping and parameter aggregation on a plurality of models according to an embodiment of this application. As shown in FIG. 9, a model 1 to a model n obtained by the aggregation node correspond to M network structures. Therefore, the aggregation node can obtain M groups (that is, a group 1 to a group M) through grouping based on the network structures of the model 1 to the model n. The model 1 and the model 3 that have a same network structure are grouped into the group 1, and the model 2 and the model n that have a same network structure are grouped into the group 2. Certainly, the group 1 may further include another model that has a same network structure as the model 1 and the model 3, and the group 2 may also include another model that has a same network structure as the model 2 and the model n. This is not specifically limited in this embodiment.

Step 703: The aggregation node performs parameter aggregation on models in each of the plurality of groups, to obtain a plurality of aggregation models, where models in a same group are aggregated to obtain one aggregation model, and the plurality of aggregation models correspond to the plurality of groups.

In this embodiment, because models in a same group have a same network structure, the models in the same group usually include a same quantity of weight parameters. Therefore, the aggregation node may perform parameter aggregation on the plurality of models in the same group, to obtain the aggregation model. In this way, the aggregation node performs parameter aggregation on the models in each of the plurality of groups, to obtain the plurality of aggregation models. Each aggregation model corresponds to one group. In other words, the plurality of aggregation models are in a one-to-one correspondence with the plurality of groups. In addition, a network structure of each aggregation model is the same as a network structure of a model in a group corresponding to the aggregation model.

A first group in the plurality of groups is used as an example. A process of performing parameter aggregation on models in the first group may specifically include: performing weighted summation on weight parameters of a plurality of models in the first group, to obtain a first aggregation model, where the first group belongs to the plurality of groups, and the first aggregation model belongs to the plurality of aggregation models. Because the plurality of models in the first group have a same network structure, network structure locations that are in the plurality of models and that have weight parameters are also the same, and network structure locations that are in the first aggregation model and that are obtained by aggregating the plurality of models and that have weight parameters are also the same. In this case, a weight parameter value at any network structure location in the first aggregation model may be obtained by performing weighted summation on weight parameters of the plurality of models at the network structure location.

For example, it is assumed that network structure locations that are in the plurality of models in the first group and that have weight parameters include a location 1 to a location M, and the first aggregation model and the plurality of models in the first group have a same network structure. Therefore, network structure locations that are in the first aggregation model and that have weight parameters also include a location 1 to a location M. In addition, a weight parameter at the location 1 in the first aggregation model is obtained by performing weighted summation on weight parameters at the location 1 in the plurality of models. A weight parameter at the location 2 in the first aggregation model is obtained by performing weighted summation on weight parameters at the location 2 in the plurality of models. By analogy, a weight parameter at each location in the first aggregation model is obtained by performing weighted summation on weight parameters at a same location in the plurality of models.

In general, a network structure of each aggregation model is the same as a network structure of a model in a group corresponding to the aggregation model, and a weight parameter in each aggregation model may be obtained by performing weighted summation on weight parameters in one or more models in a same group.

For example, as shown in FIG. 9, the model 1 and the model 3 in the group 1 are aggregated to obtain an aggregation model 1. A network structure of the aggregation model 1 is the same as the network structure of the model 1 and the model 3, and a weight parameter in the aggregation model 1 is obtained by performing weighted summation on weight parameters in the model 1 and the model 3. The model 2 and the model n in the group 2 are aggregated to obtain an aggregation model 2. A network structure of the aggregation model 2 is the same as the network structure of the model 2 and the model n, and a weight parameter in the aggregation model 2 is obtained by performing weighted summation on weight parameters in the model 2 and the model n.

Step 704: The aggregation node performs knowledge distillation training on each of the plurality of aggregation models by using the plurality of models as teacher models, to obtain a plurality of trained models.

Because each aggregation model is obtained through aggregation based on models of a same network structure in a same group, each aggregation model actually integrates only knowledge learned by the models of the same network structure, and does not integrate knowledge of other models of different network structures.

Therefore, in this embodiment, the plurality of models originally received by the aggregation node are used as the teacher models, and knowledge distillation training is performed on each aggregation model, to implement knowledge transfer between models of different network structures, and ensure that each aggregation model can learn knowledge of other models of different network structures during knowledge distillation training. In this way, the trained model obtained after knowledge distillation training is performed on the aggregation model actually integrates knowledge and experience between the models of different network structures, so that prediction precision of the trained model can be effectively improved.

For ease of understanding, the following uses an example in which the aggregation node performs knowledge distillation training on the first aggregation model in the plurality of aggregation models to describe in detail a process of performing knowledge distillation training on the aggregation model.

Specifically, in a process of performing knowledge distillation training on the first aggregation model, a training sample is first separately input into the first aggregation model and the plurality of models, to obtain a target prediction result and a plurality of prediction results. The first aggregation model may be any one of the plurality of aggregation models, the target prediction result is a prediction result output by the first aggregation model, and the plurality of prediction results are prediction results respectively output by the plurality of models. The training sample may be local data and/or public data that can be obtained on the aggregation node.

Then, a loss function may be built based on the target prediction result output by the first aggregation model and the plurality of prediction results output by the plurality of models. The loss function may be obtained based on a difference between the target prediction result and the plurality of prediction results. In this way, the first aggregation model is trained based on the loss function, to obtain a trained first aggregation model.

In this solution, a distillation loss function is built based on the difference between the prediction results of the plurality of original models and the prediction result of the aggregation model, so that experience transfer between the models of different network structures can be supported in a manner based on knowledge distillation, the aggregation model can further aggregate knowledge and experience in various network structures, and prediction precision of the aggregation model can be improved.

Optionally, the loss function includes a first sub-loss function and a second sub-loss function, the first sub-loss function is obtained based on the difference between the target prediction result and the plurality of prediction results, and the second sub-loss function is obtained based on a difference between an actual label of the training sample and the target prediction result. For example, it is assumed that the first aggregation model is used to execute an image classification task. In this case, the training sample is an image, the actual label of the training sample is an actual category of the training sample, and the target prediction result is a category prediction result output by the first aggregation model.

In addition, the loss function may be specifically obtained by performing weighted summation on the first sub-loss function and the second sub-loss function. Weights of the first sub-loss function and the second sub-loss function may be determined or adjusted based on an actual training status of the model. This is not specifically limited in this embodiment.

In this solution, a distillation loss function is built based on the difference between the prediction results of the plurality of original models and the prediction result of the aggregation model, and a label loss function is built based on the actual label of the training sample, so that experience transfer between the models of different network structures can be supported in a manner based on knowledge distillation under a constraint of the label loss function, the aggregation model can effectively aggregate knowledge and experience in various network structures, and prediction precision of the aggregation model can be improved.

The first loss function may be built in a plurality of manners.

In a possible implementation, the first loss function is obtained based on a difference between the target prediction result and each of the plurality of prediction results. In other words, the first loss function may be actually obtained by performing weighted summation on a plurality of difference values, and the plurality of difference values include a difference value between the target prediction result and each of the plurality of prediction results.

In another possible implementation, the first loss function is obtained based on a difference between the target prediction result and a weighted average value of the plurality of prediction results. In other words, after the plurality of prediction results are obtained, weighted summation may be first performed on the plurality of prediction results, where weights corresponding to the prediction results are the same, to obtain the weighted average value of the plurality of prediction results. In this way, a difference value between the target prediction result and the weighted average value of the plurality of prediction results is calculated, to obtain the first loss function. For example, when the first aggregation model is used to execute an image classification task, the plurality of prediction results output by the plurality of models are actually prediction probabilities for categories (that is, each prediction result includes a prediction probability for each category). Therefore, a process of performing weighted summation on the plurality of prediction results is actually performing weighted summation on prediction probability values of the categories, to obtain weighted summation probability values of the categories.

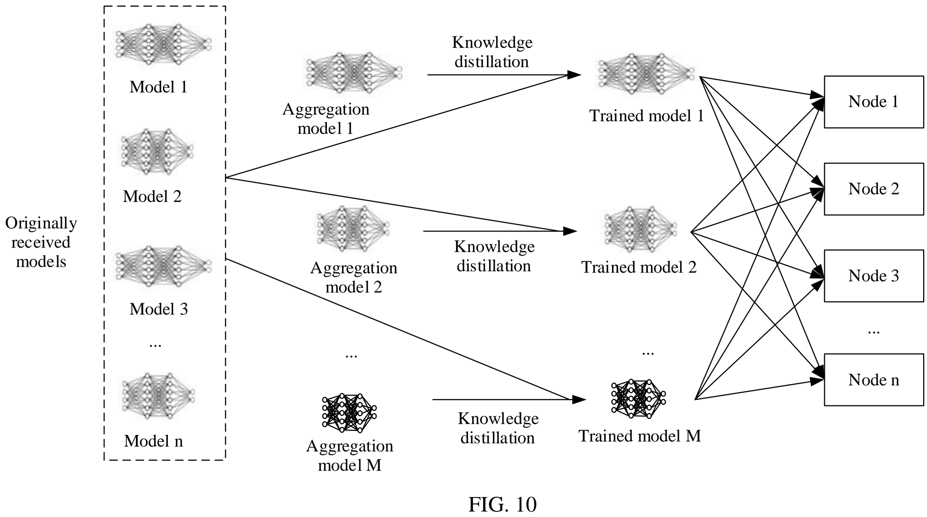

For example, FIG. 10 is a diagram of performing knowledge distillation on a plurality of aggregation models according to an embodiment of this application. As shown in FIG. 10, the aggregation node obtains, based on an originally received model 1 to a model n, an aggregation model 1 to an aggregation model M of different network structures. In addition, for each aggregation model in the aggregation model 1 to the aggregation model M, the aggregation node performs knowledge distillation on each aggregation model based on the originally received model 1 to the model n, to obtain a trained model 1 to a trained model M.

Step 705: The aggregation node sends the plurality of trained models to the plurality of nodes.

After the aggregation node performs knowledge distillation training on each aggregation model, the plurality of trained models can be obtained. The plurality of trained models are actually obtained by integrating the models of different network structures. Therefore, the aggregation node may send the plurality of trained models to the plurality of nodes, so that the plurality of nodes can select one or more of the models to continue local training.

For example, as shown in FIG. 10, after performing knowledge distillation on each aggregation model, the aggregation point obtains the trained model 1 to the trained model M, and sends the trained model 1 to the trained model M to each node in the node 1 to the node n.

It may be understood that, after the aggregation node aggregates the models uploaded by the nodes, a plurality of models of different network structures (that is, the foregoing plurality of trained models) are still obtained. Therefore, if the aggregation node sends the plurality of trained models to each node, a case in which a data communication volume is large may exist. Especially in a federated learning scenario, an aggregation node and another node usually need to exchange models for a plurality of rounds. This further increases the data communication volume.

Based on this, the aggregation node may pre-obtain a part of data owned by each node, or obtain data similar to local data on each node, to filter some models for each node based on the data, so as to avoid sending excessive models to each node.

For example, the aggregation node may determine, based on target data, some trained model from the plurality of trained models, and send the some trained model to the first node. The target data is data obtained by the aggregation node from the first node, the first node is one of the plurality of nodes, and the some trained models are models that are in the plurality of trained models and that have optimal performance when processing the target data. A quantity of the some trained models may be determined or adjusted based on a processing capability of the first node. This is not specifically limited herein.

Specifically, the first node may select a part of data from local data in advance as the target data, and send the target data to the aggregation node. The target data selected by the first node may be typical data on the first node, and can effectively represent a feature of the local data on the first node.

Alternatively, when the first node does not want to transfer real data on the first node to the aggregation node, the first node may obtain a data generator through training based on the local data on the first node. The data generator can output data similar to the local data on the first node when no data is input. In this way, after the first node sends the data generator to the aggregation node, the aggregation node may generate the target data based on the data generator.

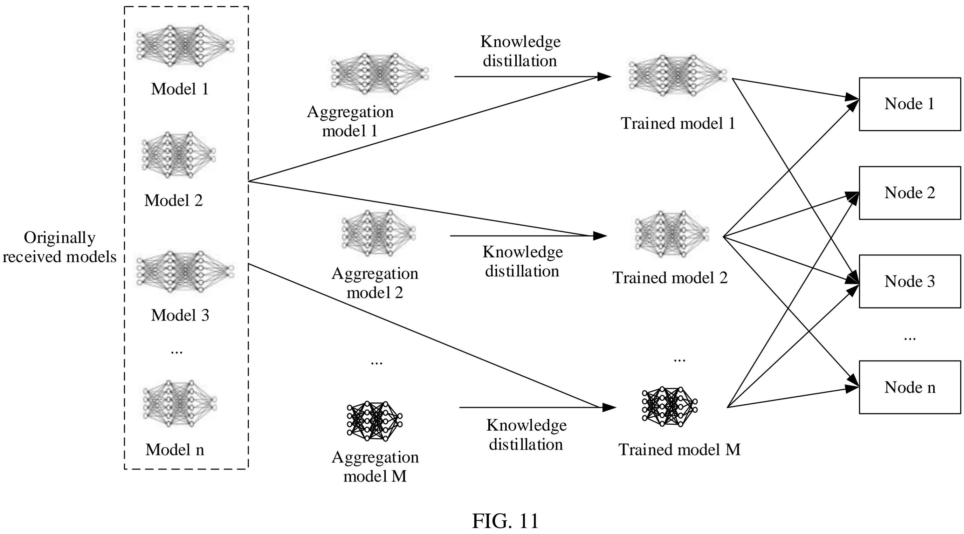

For example, FIG. 11 is a diagram in which an aggregation node sends a trained model to each node according to an embodiment of this application. As shown in FIG. 11, the aggregation node may obtain data from each node in advance, filter, based on the data from each node, some trained models for each node, and send, to the node, the some trained models obtained through filtering. The aggregation node does not need to send all trained models to each node. For example, the aggregation node sends only a trained 1 model 1 and a trained model 2 to a node 1, and the aggregation node sends only the trained model 2 and a trained model n to a node 2.

Step 706: The first node receives the plurality of trained models from the aggregation node.

The first node is one of the foregoing plurality of nodes. The plurality of trained models have different network structures, and the plurality of models are obtained by the aggregation node by aggregating models on different nodes.

Specifically, the plurality of trained models are obtained by the first node after receiving the models on the different nodes, by performing parameter aggregation on models of a same network structure and performing knowledge distillation on aggregated models based on the models on the different nodes.

Step 707: The first node determines a target model from the plurality of trained models based on training data.

The first node receives the plurality of trained models from the aggregation node, and the plurality of trained models have different processing performance for the training data on the first node. Therefore, the first node may determine, from the plurality of trained models based on the local training data, the target model that is applicable to processing the local data of the first node (that is, filter the target model that adapts to the local data of the first node).

The target model determined by the first node may include one or more trained models. When the processing capability of the first node is poor, the first node may determine one trained model as the target model. When the processing capability of the first node is strong, the first node may determine a plurality of trained models as the target model.

Specifically, the first node may determine the target model from the plurality of trained models in a plurality of manners.

In a possible implementation, the first node may input the training data into a gate network, to obtain a plurality of weight values output by the gate network. The plurality of weight values are in a one-to-one correspondence with the plurality of trained models, and the plurality of weight values respectively indicate weights of output results of the plurality of trained models in a weighted summation process. In other words, the plurality of trained models cooperate with the gate network to process the training data. The gate network is configured to output, based on the training data, a weight value corresponding to each of the plurality of trained models. In this way, after each trained model outputs an output result corresponding to the training data, weighted summation may be performed on the plurality of output results based on the weight values corresponding to the trained models, to obtain a final output result.

The gate network may be a network obtained through pre-training based on the local data of the first node. In a process of training the gate network, the first node may input the local data into both the gate network and the plurality of trained models, and the gate network outputs a weight value corresponding to each trained model. In this way, after each trained model outputs an output result corresponding to the training data, weighted summation may be performed on the plurality of output results based on the weight values corresponding to the trained models, to obtain a final output result.

Therefore, the weight value output by the gate network can reflect performance of the plurality of trained models for the local data of the first node. For any trained model, a higher weight value output by the gate network for the trained model indicates better performance of the trained model in processing the local data of the first node, that is, the trained model adapts more to the local data of the first node. A smaller weight value output by the gate network for the trained model indicates poorer performance of the trained model in processing the local data of the first node, that is, the trained model adapts less to the local data of the first node.

In this way, the first node may determine the target model based on the plurality of weight values output by the gate network, where the target model includes one or more models corresponding to a highest weight value in the plurality of trained models. In other words, the first node may measure, based on a weight value corresponding to each trained model, an adaptation degree of each trained model for the local data of the first node, to select one or more models (that is, the target model) with a highest adaptation degree from the plurality of trained models.

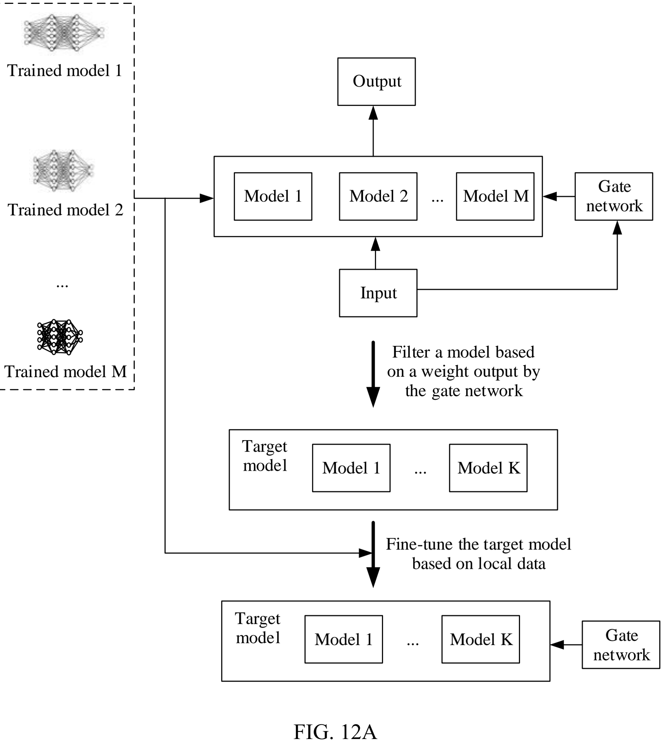

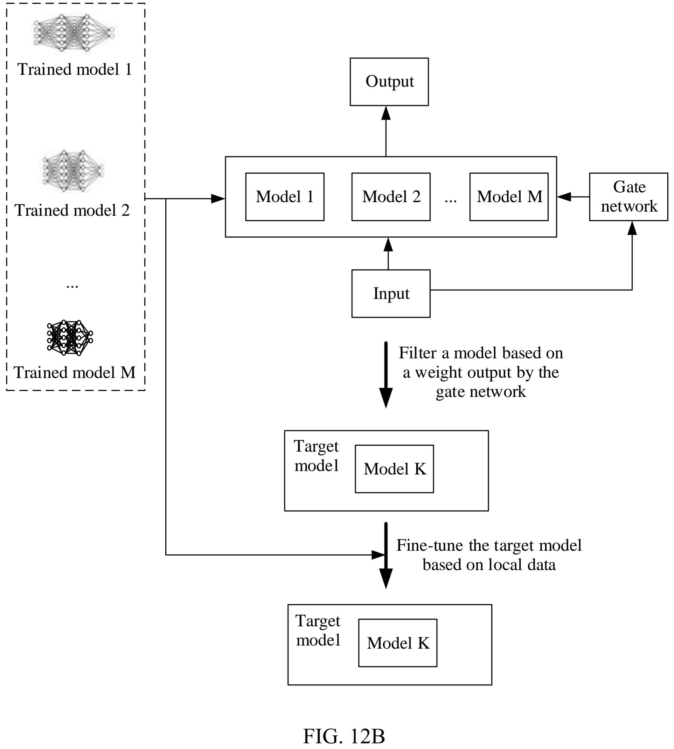

For example, FIG. 12A is a diagram of filtering a target model according to an embodiment of this application, and FIG. 12B is a diagram of filtering a target model according to an embodiment of this application. As shown in FIG. 12A and FIG. 12B, after obtaining the trained model 1 to the trained model M, the first node may build an entire model based on the gate network and the trained model 1 to the trained model M. Input data is input to both the gate network and the trained model 1 to the trained model M. The gate network outputs weight values corresponding to the trained model 1 to the trained model M, and then performs weighted summation on output results of all trained models based on the weight values, to obtain a final output result.

In FIG. 12A, after the gate network is trained based on the local data of the first node, the target model may be filtered based on the weight values output by the gate network, to obtain a model 1 to a model K. In other words, in FIG. 12A, the target model may include a plurality of models.

In FIG. 12B, after the gate network is trained based on the local data of the first node, the target model may be filtered based on the weight values output by the gate network, to obtain a model K. In other words, in FIG. 12B, the target model may include only one model.

In this solution, the weight value corresponding to each model is output by training the gate network, to measure an adaptation degree of each model for the local data, and ensure that the node can select, from the plurality of models, a target model that can have optimal performance when processing the local data of the node.

In another possible implementation, the first node may separately input the training data into each of the plurality of trained models, and determine prediction precision of each trained model based on a prediction result output by each trained model. For example, the first node may prepare a plurality of training samples, and input the plurality of training samples into the plurality of trained models, so that prediction precision of each trained model can be obtained by collecting statistics on prediction accuracy of each training sample based on the plurality of trained models.

Then, the first node determines the target model based on the prediction precision of each trained model, where the target model is one or more models with highest prediction precision in the plurality of trained models.

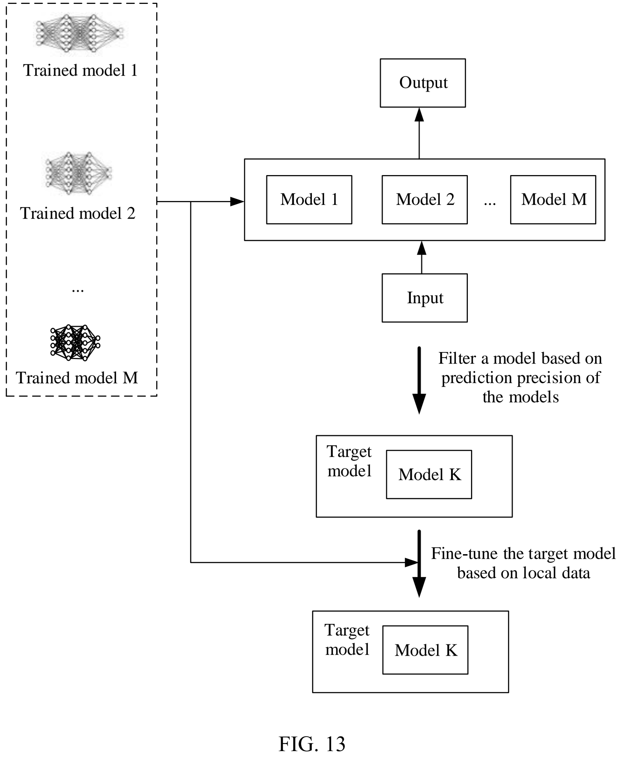

For example, FIG. 13 is another diagram of filtering a target model according to an embodiment of this application. As shown in FIG. 13, after obtaining the trained model 1 to the trained model M, the first node may input the training data into each trained model, to obtain prediction precision corresponding to each trained model, and then filter the target model based on the prediction precision of the model, to obtain a model K with highest prediction precision.

In this solution, the prediction precision of each model is determined based on the local data of the node, to measure an adaptation degree of each model for the local data, and ensure that the node can select, from the plurality of models, a target model that can have optimal performance when processing the local data of the node.

Step 708: The first node performs knowledge distillation training on the target model by using the plurality of trained models as teacher models, to obtain a trained target model.

A process in which the first node performs knowledge distillation training on the target model is similar to the process in which the aggregation node performs knowledge distillation training on the aggregation model in step 704. A difference lies in that the first node performs knowledge distillation training on the target model based on the local data on the first node, and the aggregation node performs knowledge distillation training on the aggregation model based on the local data on the aggregation node and/or public data obtained by the aggregation node. For details, refer to step 704. Details are not described herein again.

In addition, when the target model includes a plurality of models, the target model further needs to cooperate with the gate network to perform data processing. Therefore, in a process of performing knowledge distillation training on the target model, the gate network corresponding to the target model is also trained, so that the gate network can correctly output a weight value corresponding to each model in the target model.

In this embodiment, after obtaining the trained target model, the first node may deploy the trained target model on the first node, to execute an inference task based on the local data on the first node.

For example, as shown in FIG. 12A and FIG. 12B, after the target model is determined, knowledge distillation training may be performed on the target model based on the local data of the first node (that is, the target model is fine-tuned based on the local data), to further train the target model.

In this solution, after obtaining the target model through filtering, the first node performs knowledge distillation training on the target model by using the originally received model as the teacher model, so that it can be ensured that the target model does not forget original experience while performing personalized fine tuning on the local data of the first node, and a sharp fluctuation of prediction precision of the target model caused by poor local data quality of the first node can be effectively avoided (that is, a phenomenon of overfitting the target model can be avoided).

It may be understood that the foregoing steps 701 to 708 actually describe a round of iteration process in the federated learning process. In an actual application scenario, the federated learning process may include a plurality of rounds of iteration processes. To be specific, after obtaining the target model through training, each node continues to send the trained target model to the aggregation node, and the aggregation node aggregates the model uploaded by each node, that is, performs a new round of iteration process.

It is described above that after aggregating the models uploaded by the nodes, the aggregation node delivers the aggregated model to the nodes, and the nodes further filter and train the aggregated model.

In a distributed system architecture, a model is also deployed on the aggregation node, and the aggregation node also needs the model to process the local data. Therefore, in some embodiments, after obtaining the plurality of models through aggregation, the aggregation node may further filter, from the plurality of models, a model applicable to the aggregation node, and further train the filtered model.

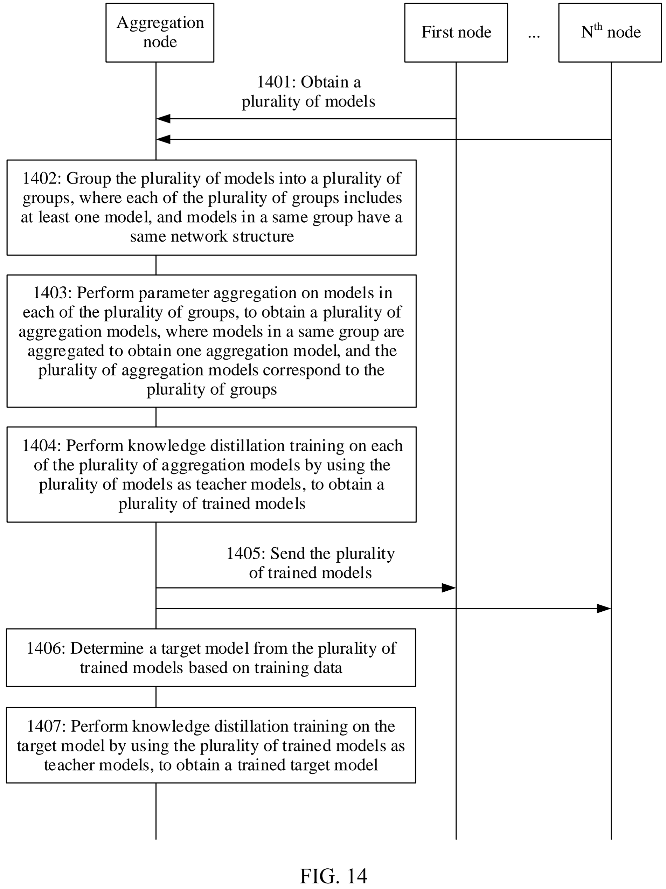

For example, FIG. 14 is a schematic flowchart of another federated learning method according to an embodiment of this application. As shown in FIG. 14, the federated learning method includes the following steps 1401 to 1407.

Step 1401: An aggregation node obtains a plurality of models, where the plurality of models are obtained from a plurality of nodes.

In this embodiment, the aggregation node is a node in a distributed system architecture, and a model is deployed on the aggregation node. Therefore, the plurality of models obtained by the aggregation node also include the model deployed on the aggregation node.

Step 1402: The aggregation node groups the plurality of models into a plurality of groups based on network structures of the plurality of models, where each of the plurality of groups includes at least one model, and models in a same group have a same network structure.

Step 1403: The aggregation node performs parameter aggregation on models in each of the plurality of groups, to obtain a plurality of aggregation models, where models in a same group are aggregated to obtain one aggregation model, and the plurality of aggregation models correspond to the plurality of groups.

Step 1404: The aggregation node performs knowledge distillation training on each of the plurality of aggregation models by using the plurality of models as teacher models, to obtain a plurality of trained models.

Step 1405: The aggregation node sends the plurality of trained models to the plurality of nodes.

Steps 1401 to 1405 are similar to the foregoing steps 701 to 705. For details, refer to the foregoing steps 701 to 705, and details are not described herein again.

Step 1406: The aggregation node determines a target model from the plurality of trained models based on training data.

Because the aggregation node also needs to process local data on the aggregation node based on the model, the aggregation node may also determine the target model from the plurality of trained models based on the training data on the aggregation node.

Step 1407: The aggregation node performs knowledge distillation training on the target model by using the plurality of trained models as teacher models, to obtain a trained target model.

Similarly, a process in which the aggregation node determines the target model and performs the knowledge distillation training on the target model is similar to the foregoing steps 707 and 708. For details, refer to the foregoing process in which the first node determines the target model and performs the knowledge distillation training on the target model in steps 707 and 708. Details are not described herein again.

The foregoing describes in detail the method provided in embodiments of this application. The following describes a device that is provided in embodiments of this application and that is configured to perform the foregoing method.

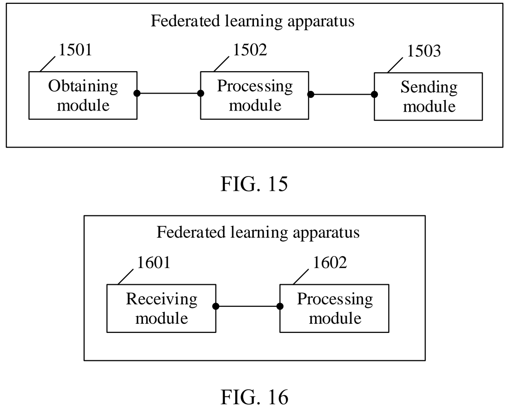

FIG. 15 is a diagram of a structure of a federated learning apparatus according to an embodiment of this application. As shown in FIG. 15, the federated learning apparatus belongs to an aggregation node, and includes:

an obtaining module 1501, configured to obtain a plurality of models, where the plurality of models are obtained from a plurality of nodes;
a processing module 1502, further configured to group the plurality of models into a plurality of groups based on network structures of the plurality of models, where each of the plurality of groups includes at least one model, and models in a same group have a same network structure, where
the processing module 1502 is further configured to perform parameter aggregation on models in each of the plurality of groups to obtain a plurality of aggregation models, where models in a same group are aggregated to obtain one aggregation model, and the plurality of aggregation models correspond to the plurality of groups; and
the processing module 1502 is further configured to perform knowledge distillation training on each of the plurality of aggregation models by using the plurality of models as teacher models, to obtain a plurality of trained models; and
a sending module 1503, configured to send the plurality of trained models to the plurality of nodes.

In a possible implementation, the processing module 1502 is further configured to:

separately input a training sample into a first aggregation model and the plurality of models, to obtain a target prediction result and a plurality of prediction results, where the first aggregation model is any one of the plurality of aggregation models, the target prediction result corresponds to the first aggregation model, and the plurality of prediction results correspond to the plurality of models; and
train the first aggregation model based on a loss function, to obtain a trained first aggregation model, where the loss function is obtained based on a difference between the target prediction result and the plurality of prediction results.

In a possible implementation, the loss function is obtained based on a difference between the target prediction result and each of the plurality of prediction results; or
the loss function is obtained based on a difference between the target prediction result and a weighted average value of the plurality of prediction results.

In a possible implementation, the loss function includes a first sub-loss function and a second sub-loss function, the first sub-loss function is obtained based on the difference between the target prediction result and the plurality of prediction results, and the second sub-loss function is obtained based on a difference between an actual label of the training sample and the target prediction result.

In a possible implementation, the processing module 1502 is further configured to:

determine a target model from the plurality of trained models based on training data; and
perform knowledge distillation training on the target model by using the plurality of trained models as teacher models, to obtain an updated target model, where the updated target model is used to execute an inference task based on local data.

In a possible implementation, the processing module 1502 is further configured to:

separately input the training data into each of the plurality of models, and determine prediction precision of each model based on a prediction result output by each model; and
determine the target model based on the prediction precision of each model, where the target model includes one or more models with highest prediction precision in the plurality of trained models.

In a possible implementation, the processing module 1502 is further configured to:

input the training data into a gate network, to obtain a plurality of weight values output by the gate network, where the plurality of weight values are in a one-to-one correspondence with the plurality of trained models, the plurality of weight values respectively indicate weights of output results of the plurality of trained models in a weighted summation process, and the gate network is a network obtained through pre-training; and
determine the target model based on the plurality of weight values, where the target model includes one or more models corresponding to a highest weight value in the plurality of trained models.

In a possible implementation,

the processing module 1502 is further configured to determine, based on target data, some trained models from the plurality of trained models, where the target data is data obtained from a first node, and the some trained models are models that are in the plurality of trained models and that have optimal performance when processing the target data; and
the sending module 1503 is further configured to send the some trained models to the first node.

In a possible implementation, the processing module 1502 is further configured to perform weighted summation on weight parameters of a plurality of models in a first group, to obtain the first aggregation model.
The first group belongs to the plurality of groups, and the first aggregation model belongs to the plurality of aggregation models.
FIG. 16 is a diagram of a structure of a federated learning apparatus according to an embodiment of this application. As shown in FIG. 16, the federated learning apparatus includes:

a receiving module 1601, configured to receive a plurality of models from an aggregation node, where the plurality of models have different network structures, and the plurality of models are obtained by the aggregation node by aggregating models on different nodes; and
a processing module 1602, configured to determine a target model from the plurality of models based on training data, where
the processing module 1602 is further configured to perform knowledge distillation training on the target model by using the plurality of models as teacher models, to obtain a trained target model.

In a possible implementation, the processing module 1602 is further configured to:

separately input the training data into each of the plurality of models, and determine prediction precision of each model based on a prediction result output by each model; and
determine the target model based on the prediction precision of each model, where the target model is one or more models with highest prediction precision in the plurality of models.

In a possible implementation, the processing module 1602 is further configured to:

input the training data into a gate network, to obtain a plurality of weight values output by the gate network, where the plurality of weight values are in a one-to-one correspondence with the plurality of trained models, the plurality of weight values respectively indicate weights of output results of the plurality of trained models in a weighted summation process, and the gate network is a network obtained through pre-training; and
determine the target model based on the plurality of weight values, where the target model includes one or more models corresponding to a highest weight value in the plurality of models.

In a possible implementation, the plurality of models are obtained by the aggregation node, after receiving the models on the different nodes, by performing parameter aggregation on models of a same network structure and performing knowledge distillation training on aggregated models based on the models on the different nodes.

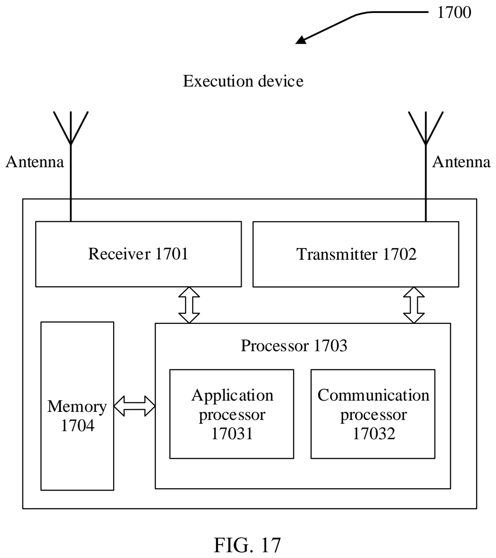

FIG. 17 is a diagram of a structure of an execution device according to an embodiment of this application. An execution device 1700 may be specifically represented as a mobile phone, a tablet computer, a notebook computer, an intelligent wearable device, a server, or the like. This is not limited herein. Specifically, the execution device 1700 includes a receiver 1701, a transmitter 1702, a processor 1703, and a memory 1704 (there may be one or more processors 1703 in the execution device 1700, and one processor is used as an example in FIG. 17). The processor 1703 may include an application processor 17031 and a communication processor 17032. In some embodiments of this application, the receiver 1701, the transmitter 1702, the processor 1703, and the memory 1704 may be connected by using a bus or in another manner.

The memory 1704 may include a read-only memory and a random access memory, and provide instructions and data for the processor 1703. A part of the memory 1704 may further include a non-volatile random access memory (non-volatile random access memory, NVRAM). The memory 1704 stores a processor and operation instructions, an executable module, a data structure, a subset thereof, or an extension set thereof. The operation instructions may include various operation instructions for implementing various operations.

The processor 1703 controls operations of the execution device. In a specific application, the components of the execution device are coupled together through a bus system. In addition to a data bus, the bus system may further include a power bus, a control bus, a status signal bus, and the like. However, for clear description, various types of buses in the figure are marked as the bus system.

The methods disclosed in the foregoing embodiments of this application may be applied to the processor 1703 or may be implemented by the processor 1703. The processor 1703 may be an integrated circuit chip and has a signal processing capability. In an implementation process, steps in the foregoing method can be implemented by using a hardware integrated logical circuit in the processor 1703, or by using instructions in a form of software. The processor 1703 may be a general-purpose processor, a digital signal processor (digital signal processor, DSP), a microprocessor, or a microcontroller; or may further include an application-specific integrated circuit (application-specific integrated circuit, ASIC), a field-programmable gate array (field-programmable gate array, FPGA) or another programmable logic device, a discrete gate or transistor logic device, or a discrete hardware component. The processor 1703 may implement or perform the methods, steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory 1704, and the processor 1703 reads information in the memory 1704 and completes the steps in the foregoing methods in combination with hardware of the processor.

The receiver 1701 may be configured to: receive input digital or character information, and generate a signal input related to related setting and function control of the execution device. The transmitter 1702 may be configured to output digital or character information through a first interface. The transmitter 1702 may be further configured to send instructions to a disk group through the first interface, to modify data in the disk group. The transmitter 1702 may further include a display device such as a display screen.

The electronic device provided in embodiments of this application may be specifically a chip. The chip includes a processing unit and a communication unit. The processing unit may be, for example, a processor, and the communication unit may be, for example, an input/output interface, a pin, or a circuit. The processing unit may execute computer-executable instructions stored in a storage unit, so that the chip in the execution device performs the method described in the foregoing embodiments. Optionally, the storage unit is a storage unit in the chip, for example, a register or a buffer. Alternatively, the storage unit may be a storage unit in a wireless access device but outside the chip, for example, a read-only memory (read-only memory, ROM), another type of static storage device that can store static information and instructions, or a random access memory (random access memory, RAM).

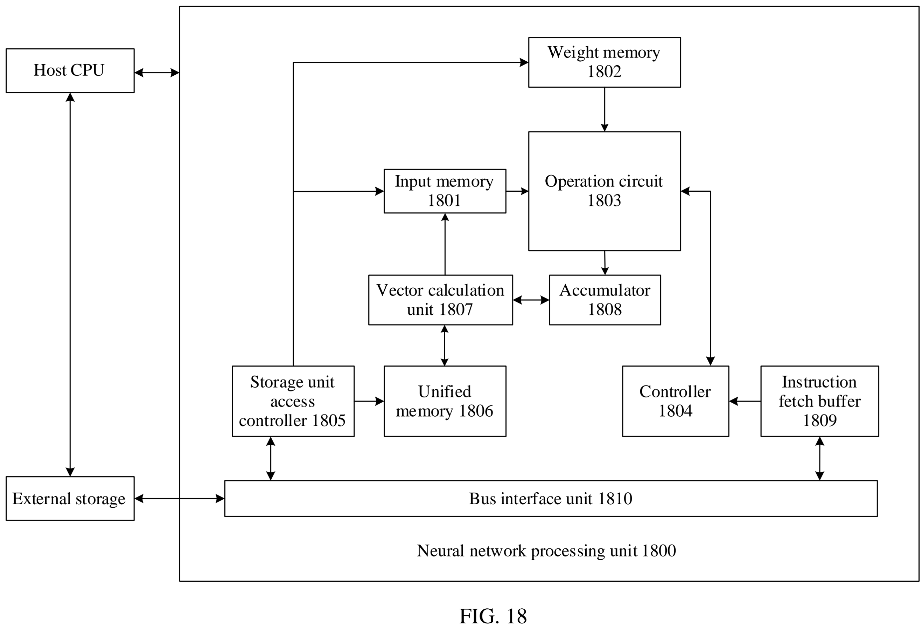

Specifically, FIG. 18 is a diagram of a structure of a chip according to an embodiment of this application. The chip may be represented as a neural network processing unit NPU 1800. The NPU 1800 is mounted to a host CPU (Host CPU) as a coprocessor, and a task is allocated by the host CPU. A core part of the NPU is an operation circuit 1803. A controller 1804 controls the operation circuit 1803 to extract matrix data in a memory and performs a multiplication operation.

In some implementations, the operation circuit 1803 internally includes a plurality of processing units (Process Engine, PE). In some implementations, the operation circuit 1803 is a two-dimensional systolic array. The operation circuit 1803 may alternatively be a one-dimensional systolic array or another electronic circuit that can perform mathematical operations such as multiplication and addition. In some implementations, the operation circuit 1803 is a general-purpose matrix processor.

For example, it is assumed that there is an input matrix A, a weight matrix B, and an output matrix C. The operation circuit fetches, from a weight memory 1802, data corresponding to the matrix B, and caches the data on each PE in the operation circuit. The operation circuit fetches data of the matrix A from an input memory 1801, to perform a matrix operation on the matrix B, and stores an obtained partial result or an obtained final result of the matrix in an accumulator (accumulator) 1808.

A unified memory 1806 is configured to store input data and output data. Weight data is directly transferred to the weight memory 1802 by using a direct memory access controller DMAC (Direct Memory Access Controller, DMAC) 1805. The input data is also transferred to the unified memory 1806 by using the DMAC.

A BIU is a bus interface unit, namely, a bus interface unit 1810, and is configured to perform interaction between an AXI bus and the DMAC and between the AXI bus and an instruction fetch buffer (Instruction Fetch Buffer, IFB) 1809.

The bus interface unit (Bus Interface Unit, BIU) 1810 is used by the instruction fetch buffer 1809 to obtain instructions from an external memory, and is further used by the storage unit access controller 1805 to obtain raw data of the input matrix A or the weight matrix B from the external memory.

The DMAC is mainly configured to transfer input data in the external memory DDR to the unified memory 1806, transfer weight data to the weight memory 1802, or transfer input data to the input memory 1801.

A vector computing unit 1807 includes a plurality of operation processing units, and performs further processing, for example, vector multiplication, vector addition, an exponential operation, a logarithmic operation, or value comparison, on an output of the operation circuit 1803 if necessary. The vector computing unit 1807 is mainly used for non-convolutional/fully-connected layer network computation in a neural network, such as batch normalization (batch normalization), pixel-level summation, and upsampling a feature map.

In some implementations, the vector computing unit 1807 can store a processed output vector in the unified memory 1806. For example, the vector computing unit 1807 may apply a linear function or a nonlinear function to the output of the operation circuit 1803, for example, perform linear interpolation on a feature plane extracted at a convolutional layer. For another example, the linear function or the nonlinear function is applied to a vector of an accumulated value to generate an activation value. In some implementations, the vector computing unit 1807 generates a normalized value, a pixel-level summation value, or both a normalized value and a pixel-level summation value. In some implementations, the processed output vector can be used as an activation input to the operation circuit 1803, for example, used at a subsequent layer in the neural network.

The instruction fetch buffer (instruction fetch buffer) 1809 connected to the controller 1804 is configured to store instructions used by the controller 1804.

The unified memory 1806, the input memory 1801, the weight memory 1802, and the instruction fetch buffer 1809 are all on-chip memories. The external memory is private to a hardware architecture of the NPU.

Any one of the processors mentioned above may be a general-purpose central processing unit, a microprocessor, an ASIC, or one or more integrated circuits for controlling program execution.

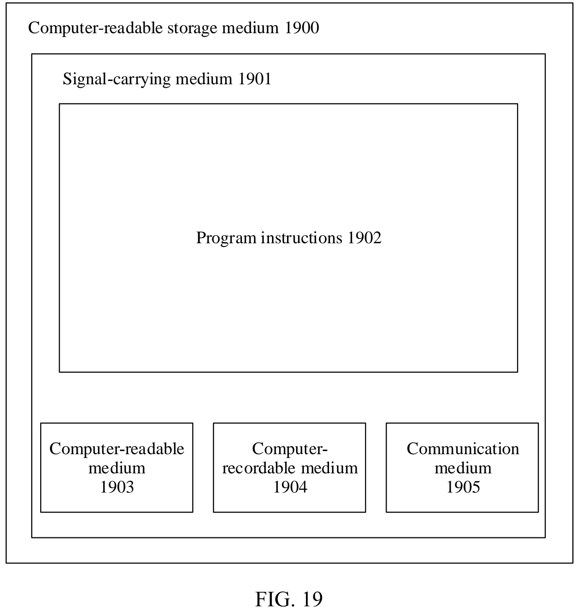

FIG. 19 is a diagram of a structure of a computer-readable storage medium according to an embodiment of this application. This application further provides a computer-readable storage medium. In some embodiments, the method disclosed in FIG. 6 may be implemented as computer program instructions encoded in a machine-readable format on the computer-readable storage medium or encoded in another non-transitory medium or product.

FIG. 19 shows an example of a conceptual partial view of an example computer-readable storage medium arranged according to at least some embodiments shown herein. The example computer-readable storage medium includes a computer program for executing a computer process on a computing device.

In an embodiment, a computer-readable storage medium 1900 is provided by using a signal-carrying medium 1901. The signal-carrying medium 1901 may include one or more program instructions 1902, and when one or more program instructions are run by one or more processors, the foregoing functions or some functions described in FIG. 6 may be provided.

In some examples, the signal-carrying medium 1901 may include a computer-readable medium 1903, for example, but not limited to, a hard disk drive, a compact disc (CD), a digital video disc (DVD), a digital tape, a memory, a ROM, or a RAM.

In some implementations, the signal-carrying medium 1901 may include a computer-recordable medium 1904, for example but not limited to, a memory, a read/write (R/W) CD, or an R/W DVD. In some implementations, the signal-carrying medium 1901 may include a communication medium 1905, for example, including but not limited to a digital and/or analog communication medium (for example, an optical cable, a waveguide, a wired communication link, or a wireless communication link). Therefore, for example, the signal-carrying medium 1901 may be conveyed by the wireless communication medium 1905 (for example, a wireless communication medium that complies with the IEEE 802. X standard or another transmission protocol).

The one or more program instructions 1902 may be, for example, computer-executable instructions or logic implementation instructions. In some examples, a computing device of a computing device may be configured to provide various operations, functions, or actions in response to the program instructions 1902 that are transmitted to the computing device through one or more of the computer-readable medium 1903, the computer-recordable medium 1904, and/or the communication medium 1905.

In addition, it should be noted that the apparatus embodiments described above are merely examples. The units described as separate parts may or may not be physically separate, and parts displayed as units may or may not be physical units, that is, may be located at one position, or may be distributed on a plurality of network units. Some or all the modules may be selected according to actual needs to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, or a network device) to perform the methods described in embodiments of this application.

All or some of the foregoing embodiments may be implemented by using software, hardware, firmware, or any combination thereof. When software is used to implement the embodiments, all or some of the embodiments may be implemented in a form of a computer program product.

The computer program product includes one or more computer instructions. When the computer program instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, a computer, a training device, or a data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by the computer, or a data storage device, such as a training device or a data center, integrating one or more usable media. The usable medium may be a magnetic medium (for example, a floppy disk, a hard disk drive, or a magnetic tape), an optical medium (for example, a DVD), a semiconductor medium (for example, a solid state disk (Solid State Disk, SSD)), or the like.

**Claims**

1. A federated learning method, comprising:

   obtaining a plurality of models, wherein the plurality of models are obtained from a plurality of nodes;
   grouping the plurality of models into a plurality of groups based on network structures of the plurality of models, wherein each of the plurality of groups comprises at least one model, and models in a same group have a same network structure;
   performing parameter aggregation on models in each of the plurality of groups to obtain a plurality of aggregation models, wherein models in a same group are aggregated to obtain one aggregation model, and the plurality of aggregation models correspond to the plurality of groups;
   performing knowledge distillation training on each of the plurality of aggregation models by using the plurality of models as teacher models, to obtain a plurality of trained models; and
   sending the plurality of trained models to the plurality of nodes.

2. The method according to claim 1, wherein the performing knowledge distillation training on each of the plurality of aggregation models by using the plurality of models as teacher models, to obtain a plurality of trained models comprises:

   separately inputting a training sample into a first aggregation model and the plurality of models, to obtain a target prediction result and a plurality of prediction results, wherein the first aggregation model is any one of the plurality of aggregation models, the target prediction result corresponds to the first aggregation model, and the plurality of prediction results correspond to the plurality of models; and
   training the first aggregation model according to a loss function, to obtain a trained first aggregation model, wherein the loss function is obtained based on a difference between the target prediction result and the plurality of prediction results.

3. The method according to claim 2, wherein the loss function is obtained based on a difference between the target prediction result and each of the plurality of prediction results; or
   the loss function is obtained based on a difference between the target prediction result and a weighted average value of the plurality of prediction results.

4. The method according to claim 2 or 3, wherein the loss function comprises a first sub-loss function and a second sub-loss function, the first sub-loss function is obtained based on the difference between the target prediction result and the plurality of prediction results, and the second sub-loss function is obtained based on a difference between an actual label of the training sample and the target prediction result.

5. The method according to any one of claims 1 to 4, wherein the method further comprises:

   determining a target model from the plurality of trained models based on training data; and
   performing knowledge distillation training on the target model by using the plurality of trained models as teacher models, to obtain an updated target model, wherein the updated target model is used to execute an inference task based on local data.

6. The method according to claim 5, wherein the determining a target model from the plurality of trained models based on training data comprises:

   separately inputting the training data into each of the plurality of models, and determining prediction precision of each model based on a prediction result output by each model; and
   determining the target model based on the prediction precision of each model, wherein the target model comprises one or more models with highest prediction precision in the plurality of trained models.

7. The method according to claim 5, wherein the determining a target model from the plurality of trained models based on training data comprises:

inputting the training data into a gate network, to obtain a plurality of weight values output by the gate network, wherein the plurality of weight values are in a one-to-one correspondence with the plurality of trained models, the plurality of weight values respectively indicate weights of output results of the plurality of trained models in a weighted summation process, and the gate network is a network obtained through pre-training; and determining the target model based on the plurality of weight values, wherein the target model comprises one or more models corresponding to a highest weight value in the plurality of trained models.

8. The method according to any one of claims 1 to 7, wherein the sending the plurality of trained models to the plurality of nodes comprises:

determining, based on target data, some trained models from the plurality of trained models, wherein the target data is data obtained from a first node, and the some trained models are models that are in the plurality of trained models and that have optimal performance when processing the target data; and sending the some trained models to the first node.

9. The method according to any one of claims 1 to 8, wherein the performing parameter aggregation on models in each of the plurality of groups to obtain a plurality of aggregation models comprises:

performing weighted summation on weight parameters of a plurality of models in a first group, to obtain the first aggregation model, wherein the first group belongs to the plurality of groups, and the first aggregation model belongs to the plurality of aggregation models.

10. A federated learning method, comprising:

receiving a plurality of models from an aggregation node, wherein the plurality of models have different network structures, and the plurality of models are obtained by the aggregation node by aggregating models on different nodes; determining a target model from the plurality of models based on training data; and performing knowledge distillation training on the target model by using the plurality of models as teacher models, to obtain a trained target model.

11. The method according to claim 10, wherein the determining a target model from the plurality of models based on training data comprises:

separately inputting the training data into each of the plurality of models, and determining prediction precision of each model based on a prediction result output by each model; and determining the target model based on the prediction precision of each model, wherein the target model is one or more models with highest prediction precision in the plurality of models.

12. The method according to claim 10, wherein the determining a target model from the plurality of models based on training data comprises:

inputting the training data into a gate network, to obtain a plurality of weight values output by the gate network, wherein the plurality of weight values are in a one-to-one correspondence with the plurality of trained models, the plurality of weight values respectively indicate weights of output results of the plurality of trained models in a weighted summation process, and the gate network is a network obtained through pre-training; and determining the target model based on the plurality of weight values, wherein the target model comprises one or more models corresponding to a highest weight value in the plurality of models.

13. The method according to any one of claims 10 to 12, wherein the plurality of models are obtained by the aggregation node, after receiving the models on the different nodes, by performing parameter aggregation on models of a same network structure and performing knowledge distillation training on aggregated models based on the models on the different nodes.

**14.** A federated learning apparatus, comprising:

an obtaining module, configured to obtain a plurality of models, wherein the plurality of models are obtained from a plurality of nodes;

the processing module, further configured to group the plurality of models into a plurality of groups based on network structures of the plurality of models, wherein each of the plurality of groups comprises at least one model, and models in a same group have a same network structure, wherein

the processing module is further configured to perform parameter aggregation on models in each of the plurality of groups to obtain a plurality of aggregation models, wherein models in a same group are aggregated to obtain one aggregation model, and the plurality of aggregation models correspond to the plurality of groups; and

the processing module is further configured to perform knowledge distillation training on each of the plurality of aggregation models by using the plurality of models as teacher models, to obtain a plurality of trained models; and

a sending module, configured to send the plurality of trained models to the plurality of nodes.

**15.** The apparatus according to claim 14, wherein the processing module is further configured to:

separately input a training sample into a first aggregation model and the plurality of models, to obtain a target prediction result and a plurality of prediction results, wherein the first aggregation model is any one of the plurality of aggregation models, the target prediction result corresponds to the first aggregation model, and the plurality of prediction results correspond to the plurality of models; and

train the first aggregation model based on a loss function, to obtain a trained first aggregation model, wherein the loss function is obtained based on a difference between the target prediction result and the plurality of prediction results.

**16.** The apparatus according to claim 15, wherein the loss function is obtained based on a difference between the target prediction result and each of the plurality of prediction results; or

the loss function is obtained based on a difference between the target prediction result and a weighted average value of the plurality of prediction results.

**17.** The apparatus according to claim 15 or 16, wherein the loss function comprises a first sub-loss function and a second sub-loss function, the first sub-loss function is obtained based on the difference between the target prediction result and the plurality of prediction results, and the second sub-loss function is obtained based on a difference between an actual label of the training sample and the target prediction result.

**18.** The apparatus according to any one of claims 14 to 17, wherein the processing module is further configured to:

determine a target model from the plurality of trained models based on training data; and

perform knowledge distillation training on the target model by using the plurality of trained models as teacher models, to obtain an updated target model, wherein the updated target model is used to execute an inference task based on local data.

**19.** The apparatus according to claim 18, wherein the processing module is further configured to:

separately input the training data into each of the plurality of models, and determine prediction precision of each model based on a prediction result output by each model; and

determine the target model based on the prediction precision of each model, wherein the target model comprises one or more models with highest prediction precision in the plurality of trained models.

**20.** The apparatus according to claim 18, wherein the processing module is further configured to:

input the training data into a gate network, to obtain a plurality of weight values output by the gate network, wherein the plurality of weight values are in a one-to-one correspondence with the plurality of trained models, the plurality of weight values respectively indicate weights of output results of the plurality of trained models in a weighted summation process, and the gate network is a network obtained through pre-training; and

determine the target model based on the plurality of weight values, wherein the target model comprises one or more models corresponding to a highest weight value in the plurality of trained models.

**21.** The apparatus according to any one of claims 14 to 20, wherein

the processing module is further configured to determine, based on target data, some trained models from the plurality of trained models, wherein the target data is data obtained from a first node, and the some trained models are models that are in the plurality of trained models and that have optimal performance when processing the target data; and

the sending module is further configured to send the some trained models to the first node.

22. A federated learning apparatus, comprising:

a receiving module, configured to receive a plurality of models from an aggregation node, wherein the plurality of models have different network structures, and the plurality of models are obtained by the aggregation node by aggregating models on different nodes; and

a processing module, configured to determine a target model from the plurality of models based on training data, wherein

the processing module is further configured to perform knowledge distillation training on the target model by using the plurality of models as teacher models, to obtain a trained target model.

23. A federated learning apparatus, comprising a memory and a processor, wherein the memory stores code, the processor is configured to execute the code, and when the code is executed, the apparatus is enabled to perform the method according to any one of claims 1 to 13.

24. A computer storage medium, wherein the computer storage medium stores instructions, and when the instructions are executed by a computer, the computer is enabled to implement the method according to any one of claims 1 to 13.

25. A computer program product, wherein the computer program product stores instructions, and when the instructions are executed by a computer, the computer is enabled to implement the method according to any one of claims 1 to 13.

FIG. 1

FIG. 2

| Output layer 140 |
| Hidden layer n 13n |
| Hidden layer 2 132 |
| Hidden layer 1 131 |

Neural network Layer 130

| 126 |
| 125 |
| 124 |
| 123 |
| 122 |
| 121 |

Convolutional layer/Pooling layer 120

Input layer 110

| Input layer 110 |

Convolutional neural network (CNN) 100

To-be-processed image

FIG. 3

FIG. 4

500

Aggregation node
501

| Client node 511 | Client node 512 | ... | Client node 51n |

Examples

FIG. 5

600

Node
603

Node
605

Node
607

Node
601

Node
602

Node
604

Node
606

Node
608

FIG. 6

| Aggregation node | First node | ... | N<sup>th</sup> node |

701: Obtain a plurality of models

702: Group the plurality of models into a plurality of groups, where each of the plurality of groups includes at least one model, and models in a same group have a same network structure

703: Perform parameter aggregation on models in each of the plurality of groups, to obtain a plurality of aggregation models, where models in a same group are aggregated to obtain one aggregation model, and the plurality of aggregation models correspond to the plurality of groups

704: Perform knowledge distillation training on each of the plurality of aggregation models by using the plurality of models as teacher models, to obtain a plurality of trained models

705: Send the plurality of trained models

706: Receive the plurality of trained models

707: Determine a target model from the plurality of trained models based on training data

708: Perform knowledge distillation training on the target model by using the plurality of trained models as teacher models, to obtain a trained target model

FIG. 7

FIG. 8

FIG. 9

FIG. 10

FIG. 11

EP 4 682 774 A1

FIG. 12A

FIG. 12B

FIG. 13

| Aggregation node | | First node | ... | N<sup>th</sup> node |

1401: Obtain a plurality of models

1402: Group the plurality of models into a plurality of groups, where each of the plurality of groups includes at least one model, and models in a same group have a same network structure

1403: Perform parameter aggregation on models in each of the plurality of groups, to obtain a plurality of aggregation models, where models in a same group are aggregated to obtain one aggregation model, and the plurality of aggregation models correspond to the plurality of groups

1404: Perform knowledge distillation training on each of the plurality of aggregation models by using the plurality of models as teacher models, to obtain a plurality of trained models

1405: Send the plurality of trained models

1406: Determine a target model from the plurality of trained models based on training data

1407: Perform knowledge distillation training on the target model by using the plurality of trained models as teacher models, to obtain a trained target model

FIG. 14

Federated learning apparatus

1501          1502          1503

| Obtaining module | Processing module | Sending module |

FIG. 15

Federated learning apparatus

1601          1602

| Receiving module | Processing module |

FIG. 16

1700

Execution device

| | |
|---|---|
| Receiver 1701 | Transmitter 1702 |

Processor 1703

| Memory 1704 | Application processor 17031 | Communication processor 17032 |
|---|---|---|

Antenna

Antenna

FIG. 17

FIG. 18

Neural network processing unit 1800

Host CPU

External storage

Bus interface unit 1810

Instruction fetch buffer 1809

Controller 1804

Weight memory 1802

Operation circuit 1803

Accumulator 1808

Input memory 1801

Vector calculation unit 1807

Unified memory 1806

Storage unit access controller 1805

Computer-readable storage medium 1900

Signal-carrying medium 1901

Program instructions 1902

| Computer-readable medium 1903 | Computer-recordable medium 1904 | Communication medium 1905 |

FIG. 19

## INTERNATIONAL SEARCH REPORT

| International application No. |
|---|
| **PCT/CN2024/075124** |

| A. | CLASSIFICATION OF SUBJECT MATTER |
|---|---|

G06N3/098(2023.01)i;  G06N3/0464(2023.01)i

According to International Patent Classification (IPC) or to both national classification and IPC

| B. | FIELDS SEARCHED |
|---|---|

Minimum documentation searched (classification system followed by classification symbols)

IPC:G06N

Documentation searched other than minimum documentation to the extent that such documents are included in the fields searched

Electronic data base consulted during the international search (name of data base and, where practicable, search terms used)

CNTXT, ENTXT, CNKI, IEEE: 不同, 多, 聚合, 联邦, 全局, 集成, 模型, 结构, 类, 组, 异构, 同构, 同样, 相同, 一样, 知识蒸馏, 学习, federated, learn, different, same, model, knowledge, distill, integrate, configuration, group

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 116468114 A (HUAWEI TECHNOLOGIES CO., LTD.) 21 July 2023 (2023-07-21) claims 1-25 | 1-25 |
| A | CN 113222175 A (SHENZHEN QIANHAI WEBANK CO., LTD.) 06 August 2021 (2021-08-06) description, paragraphs [0057]-[0088], and figures 1-5 | 1-25 |
| A | CN 111477290 A (SHANGHAI JIAO TONG UNIVERSITY) 31 July 2020 (2020-07-31) entire document | 1-25 |
| A | CN 113408743 A (BEIJING BAIDU NETCOM SCIENCE AND TECHNOLOGY CO., LTD.) 17 September 2021 (2021-09-17) entire document | 1-25 |
| A | US 2022405606 A1 (HITACHI, LTD.) 22 December 2022 (2022-12-22) entire document | 1-25 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **19 April 2024** | **24 April 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/075124**

| Patent document cited in search report | | | Publication date (day/month/year) | Patent family member(s) | | | Publication date (day/month/year) |
|---|---|---|---|---|---|---|---|
| CN | 116468114 | A | 21 July 2023 | None | | | |
| CN | 113222175 | A | 06 August 2021 | None | | | |
| CN | 111477290 | A | 31 July 2020 | None | | | |
| CN | 113408743 | A | 17 September 2021 | None | | | |
| US | 2022405606 | A1 | 22 December 2022 | JP | 2022191762 | A | 28 December 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310377345